(19) 

(11) **EP 4 520 526 B1**

(12) **EUROPEAN PATENT SPECIFICATION**

(45) Date of publication and mention of the grant of the patent:
**19.08.2026 Bulletin 2026/34**

(21) Application number: **23803615.6**

(22) Date of filing: **11.05.2023**

(51) International Patent Classification (IPC):
***B32B 27/00*** *(2006.01)* ***B32B 9/00*** *(2006.01)*
***B32B 27/32*** *(2006.01)* ***B65D 65/40*** *(2006.01)*
***B32B 1/00*** *(2024.01)* ***B32B 7/12*** *(2006.01)*
***B32B 27/08*** *(2006.01)* ***B32B 27/30*** *(2006.01)*
***C08J 5/18*** *(2006.01)*

(52) Cooperative Patent Classification (CPC):
**B32B 1/00; B32B 7/12; B32B 27/08; B32B 27/30; B32B 27/32; B65D 65/40; C08J 7/0423; C08J 7/048;** B32B 2250/02; B32B 2250/24; B32B 2250/242; B32B 2255/10; B32B 2255/205; B32B 2255/26; B32B 2255/28; (Cont.)

(86) International application number:
**PCT/JP2023/017786**

(87) International publication number:
**WO 2023/219141 (16.11.2023 Gazette 2023/46)**

(54) **GAS BARRIER FILM, PACKAGING FILM, AND PACKAGING BAG**

GASSPERRFOLIE, VERPACKUNGSFOLIE UND VERPACKUNGSBEUTEL

FILM BARRIÈRE CONTRE LES GAZ, FILM D’EMBALLAGE ET SAC D’EMBALLAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.05.2022 JP 2022078669**
**30.06.2022 JP 2022105772**

(43) Date of publication of application:
**12.03.2025 Bulletin 2025/11**

(73) Proprietor: **Toppan Holdings Inc.**
**Tokyo 110-0016 (JP)**

(72) Inventors:
- **FUKUGAMI, Miki**
**Tokyo 110-0016 (JP)**
- **FURUTA, Kaoru**
**Tokyo 110-0016 (JP)**
- **SASAKI, Noriko**
**Tokyo 110-0016 (JP)**

(74) Representative: **TBK**
**Bavariaring 4-6**
**80336 München (DE)**

(56) References cited:
**WO-A1-2020/085463** **WO-A1-2020/129291**
**WO-A1-2021/112243** **WO-A1-2021/125100**
**WO-A1-2021/220935** **WO-A1-2021/230319**
**WO-A1-2022/085586** **JP-A- 2000 233 476**
**JP-A- 2006 159 801** **JP-A- 2017 069 203**
**JP-A- 2017 177 685** **JP-A- 2021 028 394**
**JP-A- 2021 041 620** **JP-A- 2023 056 928**
**JP-A- H09 290 477**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2272/00; B32B 2307/30; B32B 2307/306; B32B 2307/308; B32B 2307/31; B32B 2307/558; B32B 2307/581; B32B 2307/72; B32B 2307/7242; B32B 2307/7244; B32B 2307/7246; B32B 2307/736; B32B 2307/7376; B32B 2307/748; B32B 2439/06; B32B 2439/46; B32B 2439/70; B32B 2439/80; C08J 2323/10; C08J 2323/12; C08J 2429/04

## Description

### Technical Field

The present disclosure relates to a gas barrier film, a packaging film and a packaging bag.

### Background Art

Gas barrier films are widely used as packaging materials for food and pharmaceuticals that undergo a heat sterilization treatment such as a boil treatment or a retort treatment. When packaging contents such as food and pharmaceuticals, in order to prevent the contents from deteriorating or spoiling and maintain their quality, it is important to reduce an oxygen transmission rate. Therefore, as conventional gas barrier films suitable for such applications, those using a polyethylene terephthalate film base having heat resistance and a low oxygen transmission rate are used.

Incidentally, regarding packaging materials including gas barrier films, in order to improve recyclability in response to growing environmental concerns, studies regarding packaging materials using a single material, so-called mono-material packaging materials, have been conducted. Generally, since polyolefin films such as polypropylene are widely used for packaging materials, in order to produce mono-material packaging materials, it is required to use the polyolefin films as the bases for the gas barrier films as well.

Polypropylene films as polyolefin films are excellent in transparency, mechanical strength, heat resistance. Therefore, the use of a polypropylene film as a base of a gas barrier film has been studied previously. For example, the following Patent Literature 1 proposes a method of blending an ethylene-α-olefin copolymer with a polypropylene film, and Patent Literatures 2 and 3 propose a method of laminating different polypropylene films.

WO 2021/125100 A1 relates to a laminate having a laminated structure provided with a first layer comprising a polyethylene resin and a second layer comprising a polypropylene resin, the first layer and/or second layer containing a polyethylene-polypropylene block copolymer that is compatible with the polyethylene resin or the polypropylene resin.

WO 2021/112243 A1 relates to a gas barrier film comprising a substrate having polypropylene as a primary component thereof; a gas barrier layer which is formed on a first surface of the substrate; and a coating layer which is formed on the gas barrier layer, wherein in infrared spectrometry performed on the first surface, the ratio of the peak intensity (I1) present in 1360-1390cm$^{-1}$ and the peak intensity (I2) present in 1440-1480cm$^{-1}$ satisfies the formula $(I1)/(I2) \leq 1.65$.

WO 2021/220935 A1 relates to a gas barrier film comprising, in this order: a substrate layer containing polypropylene; a resin layer containing a copolymer of propylene and another monomer; a vapor deposition layer of an inorganic oxide; and a gas barrier layer, wherein the thickness of the vapor deposition layer is 5 to 300 nm, and the thickness of the resin layer is 0.3 μm or greater and there is at least one softening temperature found on the vapor deposition layer side surface of the resin layer within a range from 100°C to 170°C as determined by localized thermal analysis (LTA).

### Citation List

#### Patent Literature

Patent Literature 1: Japanese Unexamined Patent Publication No. S63-291929
Patent Literature 2: Japanese Unexamined Patent Publication No. S63-290743
Patent Literature 3: Japanese Patent No. 2969657

### Summary of Invention

#### Technical Problem

However, with conventional gas barrier films using polypropylene films, it is difficult to achieve both favorable oxygen barrier properties and interlayer adhesion after the heat sterilization treatment.

One aspect of the present disclosure is to provide a gas barrier film which includes a polypropylene base and can achieve both favorable oxygen barrier properties and interlayer adhesion after a heat sterilization treatment. One aspect of the present disclosure is to provide a packaging film and a packaging bag using the gas barrier film.

#### Solution to Problem

One aspect of the present disclosure provides a gas barrier film according to claims 1 to 9.

Such a gas barrier film includes a polypropylene base and can achieve both favorable oxygen barrier properties and interlayer adhesion after a heat sterilization treatment.

Another aspect of the present disclosure provides a packaging film according to claims 10 to 15.

## Advantageous Effects of Invention

According to one aspect of the present disclosure, it is possible to provide a gas barrier film which includes a polypropylene base and can achieve both favorable oxygen barrier properties and interlayer adhesion after a heat sterilization treatment. In addition, according to one aspect of the present disclosure, it is possible to provide a packaging film using the gas barrier film.

## Brief Description of Drawings

[FIG. 1] FIG. 1 is a schematic cross-sectional view showing a gas barrier film according to a first embodiment.
[FIG. 2] FIG. 2 is a schematic cross-sectional view showing a gas barrier film according to a modified example of the first embodiment.
[FIG. 3] FIG. 3 is a schematic cross-sectional view showing a packaging film according to the first embodiment.
[FIG. 4] FIG. 4 is a schematic cross-sectional view showing a packaging film according to the modified example of the first embodiment.
[FIG. 5] (a) and (b) of FIG. 5 are diagrams showing a laminate according to a second embodiment, (a) of FIG. 5 is a schematic plan view of the laminate according to the second embodiment, and (b) of FIG. 5 is a schematic cross-sectional view showing the laminate according to the second embodiment.
[FIG. 6] FIG. 6 is a schematic front view of an example of a packaging bag according to the second embodiment.
[FIG. 7] FIG. 7 is a schematic cross-sectional view showing a laminate according to a modified example of the second embodiment.
[FIG. 8] FIG. 8 is a schematic view illustrating a method of measuring a heat shrinkage rate during heating in an oven.

## Description of Embodiments

Hereinafter, embodiments of the present disclosure will be described in detail with reference to the drawings as needed.

[First embodiment]

<Gas barrier film>

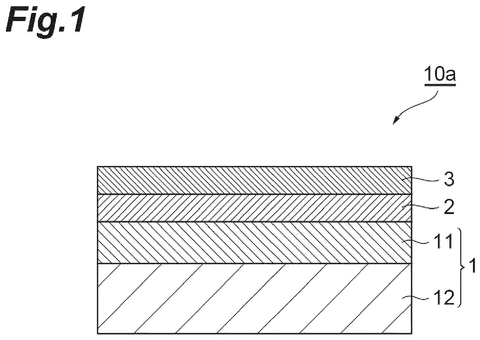

FIG. 1 is a schematic cross-sectional view showing a gas barrier film according to a first embodiment. As shown in FIG. **1,** a gas barrier film 10a includes a base layer 1, a vapor deposition layer 2, and a gas barrier coating layer 3 in that order. The base layer 1 includes a first skin layer 11 and a core layer 12, and the vapor deposition layer 2 is formed on the side of the first skin layer 11. That is, the vapor deposition layer 2 is formed on the first skin layer 11.

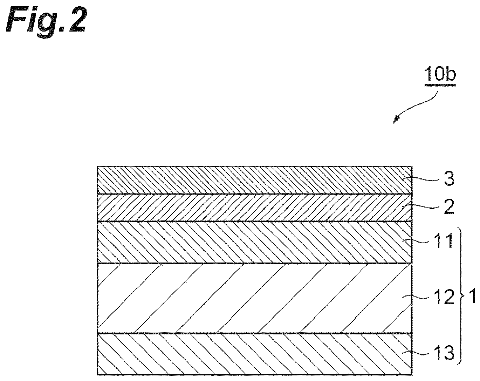

FIG. 2 is a schematic cross-sectional view showing a gas barrier film according to a modified example of the first embodiment. As shown in FIG. 2, a gas barrier film 10b includes the base layer 1, the vapor deposition layer 2, and the gas barrier coating layer 3 in that order. The base layer 1 includes the first skin layer **11,** the core layer 12 and a second skin layer 13, and the vapor deposition layer 2 is formed on the side of the first skin layer 11. That is, the vapor deposition layer 2 is formed on the first skin layer 11.

[Base layer]

The base layer is a film (base film) serving as a support and contains a polypropylene resin. Examples of polypropylene resins include homo polypropylene and propylene copolymers. Examples of propylene copolymers include polypropylene copolymers such as propylene-ethylene random copolymers, propylene-ethylene block copolymers, and propylene-$\alpha$-olefin copolymers.

As the polypropylene resin, recycled resins may be used or resins obtained by polymerizing raw materials derived from biomass such as plants may be used. These resins may be used alone or mixtures of these resins and resins polymerized from general fossil fuels may be used.

The base layer may be an oriented film or a cast film, but may be an oriented film in consideration of oxygen barrier

properties. Here, examples of oriented films include a uniaxially oriented film and a biaxially oriented film, and the biaxially oriented film may provide improved heat resistance.

The base layer is, for example, a polyolefin film. In the present embodiment, the base layer may include a polypropylene film or may be made of a polypropylene film. The polypropylene film constituting the base layer may be an oriented film or a cast film. However, in consideration of impact resistance, heat resistance, water resistance, dimensional stability, the polypropylene film may be an oriented polypropylene film. Thereby, it is possible to prevent the base layer from being thermally fused in the heat sealing process during bag production. In addition, the gas barrier film can be more suitably used in applications in which a heat treatment such as a retort treatment or a boil treatment is performed. The stretching method is not particularly limited, and any method may be used as long as it is possible to supply a film with stable dimensions such as stretching by inflation, uniaxial stretching, or biaxial stretching.

The base layer may contain known additives, for example, an antioxidant, a stabilizer, lubricants such as calcium stearate, fatty acid amides, and amide erucate, organic additives such as an antistatic agent, and inorganic additives such as silica, zeolite, syloid, hydrotalcite, and particulate lubricants such as silicon particles.

The thickness (total thickness) of the base layer is not particularly limited, and may be, for example, 3 to 200 $\mu$m or 6 to 50 $\mu$m.

In consideration of heat resistance of the gas barrier film, the polypropylene resin contained in the core layer may be a crystalline polypropylene. In order to further improve the heat resistance, the polypropylene resin contained in the core layer may be a homopolypropylene which is a homopolymer of propylene. The polypropylene resin contained in the core layer may contain a mixture of a homopolypropylene and a propylene-$\alpha$-olefin random copolymer. The polypropylene resin contained in the core layer may contain 80 mass% or more of homopolypropylene, or may contain 100 mass% of homopolypropylene.

The first skin layer can reduce the difference between the shrinkage stress of the core layer and the shrinkage stress of the gas barrier coating layer due to the heat sterilization treatment and prevent the occurrence of cracks in the gas barrier coating layer. Between the core layer and the first skin layer, another layer containing an acid-modified polyolefin, an ethylene-vinyl alcohol copolymer, a polyamide or the like and having an adhesive function may be provided, but the core layer and the first skin layer may be in contact with each other without any layer therebetween.

In order to improve the adhesion between the base layer and the vapor deposition layer, the first skin layer (the surface of the base layer that faces the vapor deposition layer) may be subjected to a surface treatment such as a plasma treatment or a corona treatment.

The second skin layer can increase the lamination strength with an adjacent layer (an outer layer film or a sealant layer). In the same manner as above, another layer may be provided between the core layer and the second skin layer. Alternatively, the core layer and the second skin layer may be in contact with each other without another layer therebetween.

In order to increase the lamination strength with adjacent layers without providing a second skin layer, the surface of the core layer may be subjected to a surface treatment such as a plasma treatment or a corona treatment, or an easy-adhesive coating layer may be provided.

In order to improve the adhesion with the core layer, the polypropylene resin contained in each skin layer may contain a propylene copolymer (a copolymer of propylene and another monomer). Examples of other monomers include $\alpha$-olefins such as ethylene, 1-butene, and 1-hexene. Specifically, the propylene copolymer may be a propylene-ethylene random copolymer, a propylene-ethylene block copolymer, a propylene-$\alpha$-olefin copolymer. In order to improve the heat resistance, each skin layer may contain a propylene-$\alpha$-olefin copolymer.

In order to improve the heat resistance, the content of propylene monomers in the propylene copolymer based on all monomers constituting the copolymer may be 90 mol% or more, or may be 92 mol% or more. In order to impart flexibility, the content of propylene monomers in the propylene copolymer based on all monomers constituting the copolymer may be 99.8 mol% or less, or may be 99.5 mol% or less.

The hardness and composite elastic modulus of the core layer and each skin layer indicate the hardness and composite elastic modulus measured by a nano-indentation method. The nano-indentation method is a measurement method in which a quasi-static indentation test is performed on a measurement object to acquire mechanical properties of a sample. A Hysitron TI-Premier (product name, commercially available from Bruker Japan) can be used as a measurement device, and a Berkovich type diamond indenter (commercially available from Bruker Japan) can be used as an indenter.

The measurement by the nano-indentation method is performed by performing, in a displacement control mode, indentation to a depth of 30 nm at an indentation speed of 30 nm/sec, then holding at the maximum depth for 1 second, and then unloading at a speed of 30 nm/sec.

The measurement is performed by acquiring a shape image of a cross section of a sample using a shape measurement function of a measurement device that scans the surface of the sample with an indenter, and specifying 20 points at intervals of 1 $\mu$m or more on a desired layer from the shape image.

When the hardness and the composite elastic modulus are calculated, a fused quartz standard sample is tested

in advance to calibrate the relationship between the contact depth and the contact projection area between the indenter and the sample. Then, the unload curve in the region of 60 to 95% of the maximum load during unloading is analyzed by the Oliver-Pharr method, and the hardness and the composite elastic modulus are calculated.

The measurement by the nano-indentation method is performed on the cross section of the base layer, where the cross section is cut after the base layer is embedded in a resin. When embedding in a resin, in order to prevent the embedding resin and the base layer from peeling off, a corona treatment may be performed on the front and back surfaces of the base layer as a surface treatment. Here, the sample used for the measurement may not be in the form of only a base layer, and may be in the form of a gas barrier film or a packaging film.

The hardness of the core layer is 0.07 GPa or more. The core layer having a hardness in this range is resistant to heat and can prevent shrinkage of the base layer during the heat sterilization treatment. The hardness of the core layer may be 0.072 GPa or more, or may be 0.075 GPa or more. The upper limit of the hardness is not particularly limited, but since a polypropylene resin is used as the material, the upper limit can be set to 0.2 GPa or less.

The hardness of the first skin layer is in a range of 0.02 to 0.15 GPa. When the hardness of the first skin layer is 0.02 GPa or more, the first skin layer is prevented from becoming too soft, and deterioration of adhesion, deterioration of the gas barrier properties and the like are less likely to occur. When the hardness of the first skin layer is 0.15 GPa or less, the first skin layer is prevented from becoming too hard. Thereby, the difference in stress between the core layer and the gas barrier coating layer during the heat sterilization treatment is reduced, and the gas barrier properties are less likely to deteriorate. In addition, the adhesion strength between the core layer and the first skin layer is less likely to deteriorate. The hardness of the first skin layer may be 0.025 to 0.10 GPa or 0.030 to 0.098 GPa.

The hardness of the second skin layer can be set to the same as that of the first skin layer 11. Thereby, it is possible to not only increase the lamination strength with adjacent layers, but also increase the adhesion strength with the core layer.

In order to reduce shrinkage of the base layer during the heat sterilization treatment and maintain the adhesion strength between the layers, the hardness of the core layer is set to be the largest in the base layer. That is, the hardness of the core layer is set to be larger than the hardness of the first skin layer, and the hardness of the core layer is set to be larger than the hardness of the second skin layer. The hardnesses of the first skin layer and the second skin layer may be the same as or different from each other.

The composite elastic modulus of the core layer may be 2.0 GPa or more. Since the core layer having a composite elastic modulus in this range is more resistant to heat, it is easier to reduce shrinkage of the base layer during the heat sterilization treatment. The composite elastic modulus of the core layer may be 2.1 GPa or more, or may be 2.13 GPa or more. The upper limit of the composite elastic modulus is not particularly limited, but since a polypropylene resin is used as the material, the upper limit is 4.5 GPa or less.

The composite elastic modulus of the first skin layer may be in a range of 1.2 to 2.5 GPa. When the composite elastic modulus of the first skin layer is 1.2 GPa or more, the first skin layer is prevented from becoming too soft, and deterioration of adhesion, deterioration of the gas barrier properties are less likely to occur. When the composite elastic modulus of the first skin layer is 2.5 GPa or less, the first skin layer is prevented from becoming too hard. Thereby, the difference in stress between the core layer and the gas barrier coating layer during the heat sterilization treatment is more easily reduced, and the gas barrier properties are less likely to deteriorate. In addition, the adhesion strength between the core layer and the first skin layer is also less likely to deteriorate. The composite elastic modulus of the first skin layer may be 1.22 to 2.48 GPa or 1.25 to 2.45 GPa.

The composite elastic modulus of the second skin layer can be set to the same as that of the first skin layer. Thereby, it is possible to not only further increase the lamination strength with adjacent layers, but also further increase the adhesion strength with the core layer.

In order to further reduce shrinkage of the base layer during the heat sterilization treatment and easily maintain the adhesion strength between the layers, the composite elastic modulus of the core layer may be set to be the largest in the base layer. That is, the composite elastic modulus of the core layer may be set to be larger than the composite elastic modulus of the first skin layer, and the composite elastic modulus of the core layer may be set to be larger than the composite elastic modulus of the second skin layer. The composite elastic moduli of the first skin layer and the second skin layer may be the same as or different from each other.

The method of adjusting the hardness and the composite elastic modulus of the core layer and each skin layer is not particularly limited. The hardness and composite elastic modulus of each layer containing a polypropylene resin can be adjusted, for example, by adjusting the type of resin constituting each layer, a mixing ratio when a plurality of resins are used, and monomer proportions when copolymers are used, and adjusting the method of producing each layer.

The thickness of each skin layer may be 0.1 μm or more. Thereby, the skin layer can be laminated uniformly on the core layer, and the variation in the thickness of the skin layer can be reduced. Accordingly, it is thought that it is possible to sufficiently reduce stress on the vapor deposition layer during the heat sterilization treatment, and it is possible to reduce deterioration of the gas barrier properties. In this regard, the thickness of each skin layer is, for example, 0.3 μm or more.

The upper limit of the thickness of each skin layer is not particularly limited, and in order to secure the heat

resistance of the entire base layer more sufficiently, the upper limit is, for example, 2.0 μm or less, and may be 1.8 μm or less.

The ratio of the thickness of the first skin layer to the thickness of the core layer (the thickness of the first skin layer/the thickness of the core layer) may be 1/100 to 1/5 or 1/70 to 1/10. When the thickness ratio is within the above range, it is possible to secure the heat resistance of the entire base layer more sufficiently and also further increase the adhesion between the layers in the gas barrier film and the packaging film.

The ratio of the thickness of the second skin layer to the thickness of the core layer (the thickness of the second skin layer/the thickness of the core layer) may be 1/100 to 1/5 or 1/70 to 1/10. When the thickness ratio is within the above range, it is possible to secure the heat resistance of the entire base layer more sufficiently and also further increase the adhesion between the layers in the gas barrier film and the packaging film.

[Vapor deposition layer]

The vapor deposition layer is a layer that contains an inorganic oxide and is provided on the base layer in order to improve the gas barrier properties against, for example, water vapor and oxygen. The vapor deposition layer may have transparency. Examples of inorganic oxides include aluminum oxide, silicon oxide, tin oxide, magnesium oxide, and mixtures thereof. In consideration of heat resistance during the heat sterilization treatment, as an inorganic oxide, particularly at least one of aluminum oxide or silicon oxide may be used.

The thickness of the vapor deposition layer may be 5 to 300 nm. When the thickness of the vapor deposition layer is 5 nm or more, it is easy to make the layer thickness uniform and it is easier to secure the function of the gas barrier film. In addition, when the thickness of the vapor deposition layer is 300 nm or less, it is easy to impart the flexibility to the vapor deposition layer, and even if an external impact such as folding or pulling is applied after the layer is formed, cracks are less likely to occur in the vapor deposition layer. In this regard, the thickness of the vapor deposition layer may be, for example, 6 nm or more, 150 nm or less, or 100 nm or less. The thickness of the vapor deposition layer may be 5 to 80 nm or 20 to 40 nm.

The vapor deposition layer 2 can be formed by a general vacuum deposition method. In addition, it is also possible to use other thin film formation methods such as a sputtering method, an ion plating method, and a plasma chemical vapor deposition method (CVD). However, in consideration of productivity, the vacuum deposition method is currently excellent.

As the vacuum deposition type heating method, any of an electron beam heating method, a resistance heating method, and an induction heating method may be used. In consideration of a wide range of selectivity for evaporation materials, the electron beam heating method may be used as the over-heating method.

In order to improve the adhesion between the vapor deposition layer and the base layer and the density of the vapor deposition layer, the vapor deposition layer can also be formed using a plasma assisted method or an ion beam assisted method. In addition, in order to increase the transparency of the vapor deposition layer, reactive vapor deposition in which various gases such as oxygen are blown during vapor deposition may be used.

[Anchor coat layer]

An anchor coat layer can be additionally provided between the base layer and the vapor deposition layer. Thereby, it is possible to further improve the adhesion between the two layers and the gas barrier properties after the heat sterilization treatment.

Examples of coating agents for providing an anchor coat layer include an acrylic resin, an epoxy resin, an acrylic urethane resin, a polyester polyurethane resin, and a polyether polyurethane resin. In consideration of the heat resistance and interlayer adhesion strength, an acrylic urethane resin or polyester polyurethane resin may be used as the coating agent.

The thickness of the anchor coat layer may be 0.05 to 2 μm. When the thickness of the anchor coat layer is 0.05 μm or more, it is possible to further improve the adhesion between the base layer and the vapor deposition layer. In addition, when the thickness of the anchor coat layer is 2 μm or less, it is easy to impart the flexibility to the anchor coat layer, and even if an external impact such as folding or pulling is applied after the layer is formed, the gas barrier properties are easily maintained. In this regard, the thickness of the anchor coat layer is, for example, 0.08 μm or more, and may be 1 μm or less.

[Gas barrier coating layer]

The gas barrier coating layer is provided in order to protect the vapor deposition layer and supplement the gas barrier properties. The gas barrier coating layer may be made of a cured product of a composition containing a water-soluble polymer having a hydroxyl group and at least one selected from the group consisting of a metal alkoxide, a silane coupling agent and a hydrolysate thereof.

Examples of water-soluble polymers having a hydroxyl group include polyvinyl alcohol, polyvinylpyrrolidone,

starch, methylcellulose, carboxymethylcellulose, and sodium alginate. Particularly, when polyvinyl alcohol (PVA) is used as the coating agent, the gas barrier properties tend to be better.

Examples of metal alkoxides include compounds represented by the following general formula.

$$M(OR^1)_m(R^2)_{n-m}$$

In the formula, $R^1$ is a monovalent organic group having 1 to 8 carbon atoms, and may be an alkyl group such as a methyl group or an ethyl group ($OR^1$ is a hydrolyzable group). $R^2$ is a monovalent organic group having 1 to 8 carbon atoms, and may be an alkyl group such as a methyl group or an ethyl group. M is an n-valent metal atom such as Si, Ti, Al, or Zr. m is an integer of 1 to n. Here, when there are a plurality of $R^1$'s or $R^2$'s, $R^1$'s or $R^2$'s may be the same as or different from each other.

Specific examples of metal alkoxides include tetraethoxysilane $[Si(OC_2H_5)_4]$ and triisopropoxyaluminum $[Al(O\text{-}2'\text{-}C_3H_7)_3]$. Tetraethoxysilane (TEOS) and triisopropoxyaluminum tend to be relatively stable in an aqueous solvent after hydrolysis.

Examples of silane coupling agents include compounds represented by the following general formula.

$$Si(OR^{21})_p(R^{22})_{3-p}R^{23} \quad \ldots \quad (2)$$

In the formula, $R^{21}$ is an alkyl group such as a methyl group or an ethyl group, $R^{22}$ is a monovalent organic group such as an alkyl group, an aralkyl group, an aryl group, an alkenyl group, an alkyl group substituted with an acryloxy group or an alkyl group substituted with a methacryloxy group, $R^{23}$ is a monovalent organic functional group, and p is an integer of 1 to 3. Here, when there are a plurality of $R^{21}$'s or $R^{22}$'s, $R^{21}$'s or $R^{22}$'s may be the same as or different from each other. Examples of monovalent organic functional groups represented by $R^{23}$ include monovalent organic functional groups containing a glycidyloxy group, an epoxy group, a mercapto group, a hydroxyl group, an amino group, an alkyl group substituted with a halogen atom, or an isocyanate group. Compounds obtained by converting these silane coupling agents into multimers such as dimers and trimers may also be used.

Regarding the silane coupling agent, specific examples of silane coupling agents include vinyltrimethoxysilane, γ-chloropropylmethyldimethoxysilane, γ-chloropropyltrimethoxysilane, 3-glycidoxypropylmethyldimethoxysilane, 3-glycidoxypropyltrimethoxysilane, 3-glycidoxypropylmethyldiethoxysilane, 3-glycidoxypropylmethyltriethoxysilane, γ-methacryloxypropyltrimethoxysilane, γ-methacryloxypropylmethyldimethoxysilane, and 1,3,5-tris(3-methoxysilylpropyl)isocyanurate.

The gas barrier coating layer can be formed by coating a composition for forming a gas barrier coating layer onto the vapor deposition layer and then drying it by heating. The composition for forming a gas barrier coating layer can be prepared by dissolving a water-soluble polymer in an aqueous solvent (water, a water/alcohol mixed solvent), and mixing it with at least one of a metal alkoxide or a silane coupling agent, or with a pre-hydrolyzed form thereof. As necessary, an isocyanate compound or known additives such as a dispersant, a stabilizer, a viscosity adjusting agent, and a coloring agent can be added to this composition (mixed solution) as long as the gas barrier properties are not impaired.

When PVA is used as the water-soluble polymer, the amount of PVA in the composition based on the total solid content of the composition may be a mass proportion of 20 to 70 mass% or 25 to 60 mass%. When the amount of PVA is 20 mass% or more, the flexibility of the layer is maintained, and it becomes easy to form a gas barrier coating layer. On the other hand, when the amount of PVA is 70 mass% or less, it is easy to impart the gas barrier properties to the gas barrier film more sufficiently.

When TEOS is used as the metal alkoxide, the amount of TEOS in the composition based on the total solid content of the composition may be a mass proportion of 30 to 80 mass% or 40 to 75 mass%. When the amount of TEOS is 30 mass% or more, strong gas barrier properties are easily exhibited. On the other hand, when the amount of TEOS is 80 mass% or less, the flexibility of the layer is easily maintained. The amount of TEOS is calculated in terms of $SiO_2$.

When an isocyanurate silane is used as the silane coupling agent, it may be a mass proportion of 1 to 20 mass% or 5 to 15 mass% based on the total solid content of the composition. When the amount of isocyanurate silane is 1 mass% or more, hot water resistance is easily obtained and the adhesion strength is less likely to decrease. On the other hand, when the amount of isocyanurate silane is 20 mass% or less, the amount of other components in the composition does not become too small, and as a result, strong gas barrier properties are easily obtained.

The thickness of the gas barrier coating layer may be 0.1 to 5 μm. When the thickness of the gas barrier coating layer is 0.1 μm or more, strong gas barrier properties are easily exhibited. In addition, when the thickness of the gas barrier coating layer is 5 μm or less, it is possible to reduce deterioration of the gas barrier properties due to the occurrence of cracks in the layer during coating, and in this regard, the thickness of the gas barrier coating layer may be, for example, 0.2 μm or more and 1 μm or less.

<Packaging film>

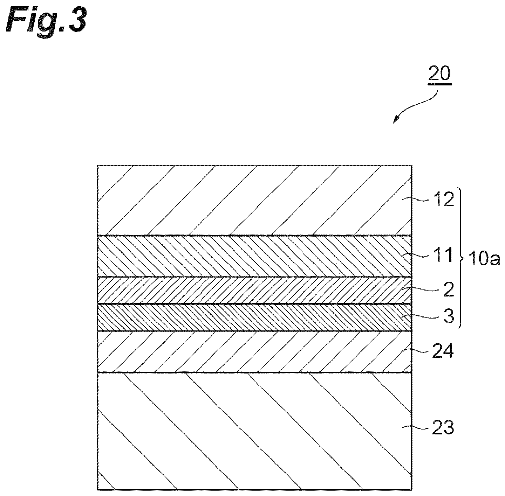

FIG. 3 is a schematic cross-sectional view showing a packaging film according to the first embodiment. A packaging film 20 shown in FIG. 3 has a structure in which a sealant layer 23 is laminated on the gas barrier coating layer 3 of the gas barrier film 10a with an adhesive layer 24 therebetween.

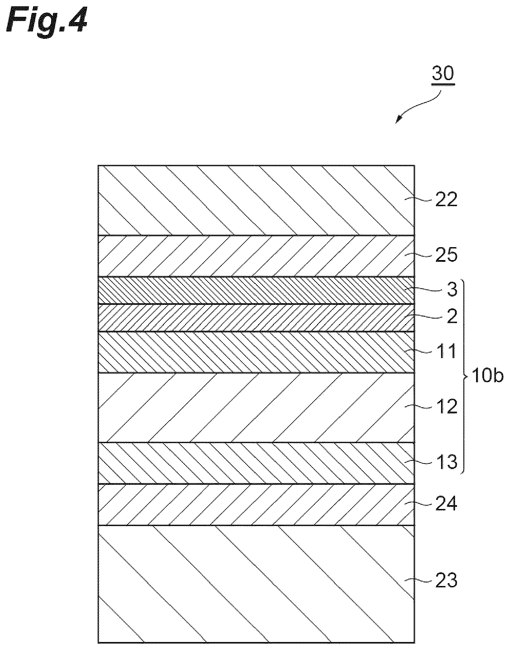

FIG. 4 is a schematic cross-sectional view showing a packaging film according to the modified example of the first embodiment. In a packaging film 30 shown in FIG. 4, the sealant layer 23 is laminated on the second skin layer 13 of the gas barrier film 10b with the adhesive layer 24 therebetween, and an outer layer film (the outermost layer) 22 is laminated on the gas barrier coating layer 3 of the gas barrier film 10b with a second adhesive layer 25 therebetween. In the packaging film 30 shown FIG. 4, the gas barrier film 10b may be oriented in the opposite direction. That is, the outer layer film (second base layer) 22 may be laminated on the second skin layer 13 of the gas barrier film 10b with the second adhesive layer 25 therebetween and the sealant layer 23 may be laminated on the gas barrier coating layer 3 of the gas barrier film 10b with the adhesive layer 24 therebetween.

(Outer layer film)

The outer layer film is a layer that is provided in order to increase the rigidity of the packaging bag. Therefore, the outer layer film can be called a second base layer. In order to make the packaging film into a mono-material packaging material, the outer layer film contains a polyolefin resin. Examples of polyolefin resins include polyethylene and polypropylene, and in consideration of retort treatment resistance, polypropylene may be used. Here, the polypropylene may be either a homopolypropylene or propylene copolymer, and in consideration of heat resistance, a homopolypropylene may be used.

The outer layer film may be an oriented film or a cast film, and in consideration of oxygen barrier properties, an oriented film may be used.

The thickness of the outer layer film is not particularly limited, and may be, for example, 15 to 200 μm.

(Sealant layer)

The sealant layer contains a polyolefin resin. Specifically, as the polyolefin resin, ethylene resins such as a low density polyethylene resin (LDPE), a medium density polyethylene resin (MDPE), a linear low density polyethylene resin (LLDPE), an ethylene-vinyl acetate copolymer (EVA), an ethylene-a olefin copolymer, and an ethylene-(meth)acrylic acid copolymer, and polypropylene resins such as a homo polypropylene resin (PP), a propylene-ethylene random copolymer, a propylene-ethylene block copolymer, and a propylene-a olefin copolymer or a mixture thereof can be used. The material of the sealant layer can be appropriately selected from among the above thermoplastic resins depending on the purpose of use and temperature conditions of a boil treatment and a retort treatment.

The sealant layer may be a polyolefin film like the base layer. The sealant layer is, for example, a resin layer having a single-layer structure and mainly made of polypropylene, but the present disclosure is not limited thereto. The sealant layer may include a polypropylene film or may be made of a polypropylene film.

The thermoplastic resin constituting the sealant layer may or may not be stretched. In order to lower the melting point and facilitate heat sealing, the thermoplastic resin does not have to be stretched. The polypropylene film constituting the sealant layer may be a cast polypropylene film in order to increase sealing properties by heat sealing.

The thickness of the sealant layer is not particularly limited, and may be, for example, 15 to 200 μm.

(Adhesive layer)

The adhesive layer bonds the films together. Examples of adhesives constituting the adhesive layer include polyurethane resins in which a di- or higher-functional isocyanate compounds is reacted with a main agent such as polyester polyol, polyether polyol, acrylic polyol, or carbonate polyol. Various polyols may be used alone or two or more thereof may be used in combination. In consideration of heat resistance (retort treatment resistance) during the heat sterilization treatment, a two-component curing type urethane adhesive may be used.

In order to promote the adhesion, a carbodiimide compound, an oxazoline compound, an epoxy compound, a phosphorus compound, a silane coupling agent or the like may be added to the above polyurethane resin. As the adhesive, in consideration of environmental concerns, one in which a polymer component is derived from biomass or one having biodegradability may be used. In addition, the adhesive may be an adhesive having barrier properties.

The amount of the adhesive applied may be, for example, 0.5 to 10 g/$m^2$ in order to obtain a desired adhesive strength, followability, and processability.

The thickness of the adhesive layer may be, for example, 0.5 μm or more and 10 μm or less. When the thickness of the adhesive layer is 0.5 μm or more, it is possible to effectively prevent peeling off between the gas barrier coating layer

and the sealant layer. When the thickness of the adhesive layer is 10 μm or less, the packaging film can be easily made into a mono-material (details will be described below). The thickness of the adhesive layer may be 1 μm or more or 2 μm or more, and may be 8 μm or less, 6 μm or less, or 5 μm or less.

(Second adhesive layer)

The second adhesive layer is a layered member that bonds the gas barrier film and the outer layer film. The material of the adhesive contained in the second adhesive layer is the same as the material of the adhesive contained in the adhesive layer. Therefore, descriptions of the material contained in the second adhesive layer and the like will be omitted. The thickness of the second adhesive layer is the same as the thickness of the adhesive layer, and is, for example, 0.5 μm or more and 10 μm or less.

(Content of polyolefins)

The total mass proportion of polyolefins (in the present embodiment, polypropylene) in the packaging film is 90 mass% or more. Thereby, the packaging film can be called a (mono-material) packaging material made of a single material and has excellent recyclability. In order to further improve recyclability, the content of polyolefins in the packaging film based on a total amount of the packaging film may be 92.5 mass% or more or 95 mass% or more.

(Heat shrinkage rate of base layer)

After the base layer is exposed to 120°C for 15 minutes (hereinafter simply referred to as "after heating"), the heat shrinkage rate of the base layer in the MD direction calculated by the following Formula (1) is 1% or more. For example, after the base layer or the gas barrier film including the base layer is heated in an oven at 120°C for 15 minutes, the heat shrinkage rate of the base layer in the MD direction calculated by the following Formula (1) is 1% or more. In order to reduce deformation during bag production and prevent peeling off between the gas barrier film and the sealant layer, the heat shrinkage rate in the MD direction is, for example, 12% or less, 11% or less, 10% or less, 9% or less, 8% or less, or 7% or less. Here, for example, the heat shrinkage rate of the biaxially oriented polypropylene film is 1% or more, and the heat shrinkage rate of the PET film is less than 1%.

heat shrinkage rate in the MD direction (%)=(MD direction length before heating-MD direction length after heating)/MD direction length before heating×100 (1)

After the above heating, the heat shrinkage rate of the base layer in the TD direction calculated by the following Formula (2) is not particularly limited, and is, for example, 1% or more. In order to reduce deformation during bag production and prevent peeling off between the gas barrier film and the sealant layer, the heat shrinkage rate in the TD direction is, for example, 12% or less, 11% or less, 10% or less, 9% or less, 8% or less, or 7% or less.

heat shrinkage rate in the TD direction (%)=(TD direction length before heating-TD direction length after heating)/TD direction length before heating×100 (2)

(Hardness of adhesive layer)

In consideration of the above heat shrinkage rate of the base layer, in the present embodiment, after a retort treatment is performed on the packaging film, the hardness of the adhesive layer is 0.1 MPa or more and less than 0.9 MPa. In this case, the adhesive layer can favorably conform to expansion and contraction of the base layer due to the heat treatment such as a retort treatment or a boil treatment. Therefore, even if the heat treatment is performed on a packaging film including a base layer having the above heat shrinkage rate, peeling off between the gas barrier film and the sealant layer is unlikely to occur. In addition, the occurrence of cracks in the adhesive layer during cooling after the heat treatment and the occurrence of damage to the gas barrier film (at least one of the vapor deposition layer or the gas barrier coating layer) caused by the occurrence of cracks are reduced. The hardness of the adhesive layer before the retort treatment is performed is not particularly limited, and is, for example, 1.0 MPa or more.

The hardness of the adhesive layer can be controlled by the adhesive material, the amount of the curing agent, the aging time. As the distance between adhesive molecular chains is narrower, the adhesive layer tends to be harder. As the adhesive is bulkier, the adhesive layer tends to be softer. The hardness of the aliphatic adhesive layer tends to be harder than that of an alicyclic or aromatic adhesive layer. The hardness of the alicyclic adhesive layer tends to be harder than that of the aromatic adhesive layer. As the amount of the curing agent contained in the adhesive layer is larger, the

adhesive layer tends to be harder. As the aging time is longer, the adhesive layer tends to be harder.

The hardness of the adhesive layer in the packaging film is obtained by measuring the hardness of a part (exposed part) exposed from the sealant layer. Removal of the sealant layer to expose the adhesive layer is performed using, for example, a diagonal cutting device. In the present embodiment, the hardness of the adhesive layer is measured by the nano-indentation method. The hardness of a sample such as an adhesive layer is calculated by, for example, the following method. First, a fused quartz standard sample is tested in advance to calibrate the relationship between the contact depth and the contact projection area between the indenter and the sample. Then, the unload curve in the region of 20 to 95% of the maximum load during unloading is analyzed by the Oliver-Pharr method, and the hardness of the sample is calculated.

(Hardness of outer layer film)

After the outer layer film is exposed to 120°C for 15 minutes, the heat shrinkage rate of the outer layer film in the MD direction calculated by Formula (1) is 1% or more. For example, after the outer layer film or a laminate of the outer layer film and the gas barrier film 10b is heated in an oven at 120°C for 15 minutes, the heat shrinkage rate of the outer layer film in the MD direction calculated by the following Formula (1) is 1% or more. The following heat shrinkage rate in the MD direction is, for example, 12% or less, 11% or less, 10% or less, 9% or less, 8% or less, or 7% or less.

After the above heating, the heat shrinkage rate of the outer layer film in the TD direction calculated by Formula (2) is not particularly limited, and is, for example, 1% or more and 12% or less.

(Hardness of second adhesive layer)

In this modified example, after a retort treatment is performed on the packaging film, the hardness of the second adhesive layer is 0.1 MPa or more and less than 0.9 MPa. In this case, the second adhesive layer can favorably conform to expansion and contraction of the outer layer film due to the heat treatment such as a retort treatment or a boil treatment. Therefore, even if the heat treatment is performed on a packaging film including a second adhesive layer having the above heat shrinkage rate, peeling off between the gas barrier film and the outer layer film is unlikely to occur. In addition, the occurrence of cracks in the second adhesive layer during cooling after the heat treatment and the occurrence of damage to the gas barrier film (at least one of the vapor deposition layer or the gas barrier coating layer) caused by the occurrence of cracks are reduced. The hardness of the second adhesive layer before the retort treatment is performed is not particularly limited and is, for example, 1.0 MPa or more.

The hardness of the second adhesive layer can be controlled by the adhesive material, the amount of the curing agent, the aging time and the like. As the distance between adhesive molecular chains is narrower, the second adhesive layer tends to be harder. As the adhesive is bulkier, the second adhesive layer tends to be softer. The hardness of the aliphatic second adhesive layer tends to be harder than that of an alicyclic or aromatic second adhesive layer. The hardness of the alicyclic second adhesive layer tends to be harder than that of an aromatic second adhesive layer. As the amount of the curing agent contained in the second adhesive layer is larger, the second adhesive layer tends to be harder. As the aging time is longer, the second adhesive layer tends to be harder.

<Packaging bag>

The packaging bag is made by forming the above packaging film into a bag. The packaging bag can accommodate the contents such as food and pharmaceuticals.

The packaging bag may be one in which one packaging film is folded in half so that the sealant layers face each other and three sides are then heat-sealed to form a bag shape or one in which two packaging materials are stacked so that the sealant layers face each other and four sides are then heat-sealed to form a bag shape. In addition, the packaging bag may have a shape having a bent part (folded part) such as a standing pouch. The packaging bag according to the present embodiment can maintain strong gas barrier properties even if it has a shape having a bent part.

[Second embodiment]

<Laminate>

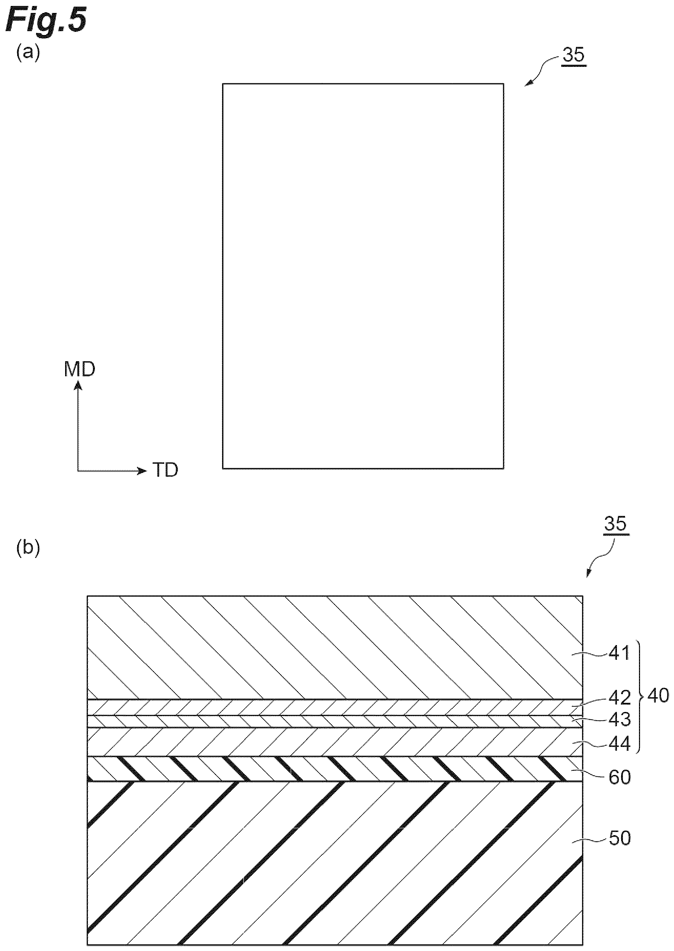

(a) of FIG. 5 is a schematic plan view of a laminate according to one embodiment, and (b) of FIG. 5 is a schematic cross-sectional view showing a laminate according to one embodiment. A laminate 35 shown in (a) and (b) of FIG. 5 is a sheet-like member having gas barrier properties (gas barrier laminate), and is, for example, a sheet-like packaging material used to produce a packaging bag. For example, the laminate 35 can be suitably used in applications in which a heat treatment such as a retort treatment or a boil treatment is performed. The laminate 35 may correspond to the

packaging film of the first embodiment.

The retort treatment is a method of pressure-sterilizing microorganisms such as mold, yeast, and bacteria in order to preserve, generally, food, pharmaceuticals. Usually, packaging bags packaging food are subjected to a pressure sterilization treatment under conditions of 105 to 140°C, 0.15 to 0.30 MPa, and 10 to 120 minutes. Retort devices are of a steam type using heated steam and a hot water type using pressurized hot water, and are appropriately used depending on sterilization conditions for food that are the contents. The boil treatment is a method of moist heat sterilization for preserving food, pharmaceuticals. Usually, depending on the contents, packaging bags packaging food and the like are subjected to a moist heat sterilization treatment under conditions of 60 to 100°C, atmospheric pressure, and 10 to 120 minutes. The boil treatment is usually performed in a hot water tank at 100°C or lower. There are methods of a batch type in which the sample is immersed in a hot water tank at a certain temperature, treated for a certain time, and then removed and a continuous type in which the sample is passed through a tunnel in a hot water tank and treated.

The laminate 35 includes a barrier layer 40, a sealant layer 50, and an adhesive layer 60. The barrier layer 40 and the sealant layer 50 are laminated to each other and bonded with the adhesive layer 60. In the laminate 35, the barrier layer 40, the adhesive layer 60, and the sealant layer 50 are laminated in this order. Hereinafter, as shown in (a) of FIG. 5, the direction MD is defined as the flow direction (longitudinal direction) of the laminate 35, and the direction TD is defined as the width direction (short direction) of the laminate 35. In addition, a direction perpendicular to both the directions MD and TD is defined as the lamination direction of the members included in the laminate 35.

[Barrier layer 40]

The barrier layer 40 is a member that functions as a support in the laminate 35 and exhibits gas barrier properties against gases such as water vapor and oxygen. The barrier layer 40 may correspond to the gas barrier film of the first embodiment. As shown in FIG. 5, the barrier layer 40 includes a base 41, an adhesive layer 42, a vapor deposition layer 43, and a barrier coat 44. In the barrier layer 40, the base 41, the adhesive layer 42, the vapor deposition layer 43, and the barrier coat 44 are laminated in this order. Therefore, the adhesive layer 42 and the vapor deposition layer 43 are positioned between the base 41 and the barrier coat 44 in the lamination direction, and the adhesive layer 42 is positioned between the base 41 and the vapor deposition layer 43. In the present embodiment, the barrier coat 44 in the barrier layer 40 is closest to the adhesive layer 60 in the lamination direction. Therefore, the base 41 in the barrier layer 40 is farthest from the adhesive layer 60 in the lamination direction.

[Base 41]

The base 41 is a plastic member (base layer) that functions as the outermost layer in the laminate 35. The thickness of the base 41 is not particularly limited. Depending on applications, the thickness can be set to 6 to 200 μm, but in order to reduce the amount of the material used to reduce the environmental burden and to obtain excellent heat resistance and impact resistance and excellent gas barrier properties, the thickness may be 9 to 50 μm, 12 to 38 μm or 18 to 30 μm.

In consideration of recycling suitability and the like of the laminate 35, the base 41 is, for example, a polyolefin film. In the present embodiment, the base 41 may include a polypropylene film or may be made of a polypropylene film. The polypropylene film may be an acid-modified polypropylene film obtained by graft-modifying polypropylene with an unsaturated carboxylic acid, an anhydride of an unsaturated carboxylic acid, an ester of an unsaturated carboxylic acid or the like. In addition, as the polypropylene, polypropylene resins such as a homo polypropylene resin (PP), a propylene-ethylene random copolymer, a propylene-ethylene block copolymer, and a propylene-a olefin copolymer can be used.

Various additives such as a flame retardant, a slip agent, an antiblocking agent, an antioxidant, a light stabilizer, a tackifier, and an antistatic agent may be added to the polypropylene film constituting the base 41.

The polypropylene film constituting the base 41 may be an oriented film or a cast film. However, in consideration of impact resistance, heat resistance, water resistance, dimensional stability and the like, the polypropylene film may be an oriented polypropylene film. Thereby, it is possible to prevent the base 41 from being thermally fused in the heat sealing process during bag production. In addition, the laminate 35 can be more suitably used in applications in which a heat treatment such as a retort treatment or a boil treatment is performed. The stretching method is not particularly limited, and any method may be used as long as it is possible to supply a film with stable dimensions such as stretching by inflation, uniaxial stretching, or biaxial stretching.

The surface of the base 41 on which layers are laminated may be subjected to various pretreatments such as a corona treatment, a plasma treatment, and a flame treatment as long as the barrier performance is not impaired, or a coating layer such as an easy-adhesive layer may be provided.

[Adhesive layer]

The adhesive layer 42 functions as a layer (anchor coat layer) that can improve adhesion performance of the vapor deposition layer 43 on the base 41 and is provided directly on the base 41. Therefore, the adhesive layer 42 is positioned between the base 41 and the vapor deposition layer 43. When the adhesive layer 42 is provided, it is possible to improve the smoothness of the surface where the vapor deposition layer 43 is provided in the barrier layer 40. Here, the improved smoothness allows the vapor deposition layer 43 to be easily uniformly formed without defects, and strong barrier properties to be easily exhibited. The adhesive layer 42 can be formed using, for example, an anchor coating agent.

Examples of anchor coating agents include polyester polyurethane resins and polyether polyurethane resins. As the anchor coating agent, a polyester polyurethane resin can be used in consideration of the heat resistance and interlayer adhesive strength.

The thickness of the adhesive layer 42 is not particularly limited, and may be in a range of 0.01 to 5 μm, a range of 0.03 to 3 μm, or a range of 0.05 to 2 μm. When the thickness of the adhesive layer 42 is equal to or more than the lower limit value, a more sufficient interlayer adhesive strength tends to be obtained, and on the other hand, when the thickness is equal to or less than the upper limit value, desired gas barrier properties tend to be easily exhibited.

As the method of applying the adhesive layer 42 onto the base 41, known application methods can be used without any particular limitation, and examples thereof include an immersing method (dipping method); and a method using a spray, coater, printing machine, brush or the like. In addition, examples of types of coaters and printing machines used in these methods and coating methods thereof include gravure coaters using a direct gravure method, a reverse gravure method, a kiss reverse gravure method, and an offset gravure method, and a reverse roll coater, a micro gravure coater, a coater combined with a chamber doctor, an air knife coater, a dip coater, a bar coater, a comma coater, a die coater.

The amount of the adhesive layer 42 applied may be 0.01 to 5 g/m$^2$ or 0.03 to 3 g/m$^2$ in terms of mass per 1 m$^2$ after an anchor coating agent is applied and dried. When the mass per 1 m$^2$ after the anchor coating agent is applied and dried is equal to or more than the lower limit, film formation tends to be sufficient, and on the other hand, when the mass is equal to or less than the upper limit, drying tends to be sufficient and the solvent is less likely to remain.

The method of drying the adhesive layer 42 is not particularly limited, and examples thereof include a method of natural drying, a method of drying in an oven set at a predetermined temperature, and a method using a dryer attached to the coater, for example, an arch dryer, a floating dryer, a drum dryer, an infrared dryer or the like. In addition, drying condition can be appropriately selected depending on the drying method, and for example, in the method of drying in an oven, drying may be performed at a temperature of 60 to 100°C for about 1 second to 2 minutes.

As the adhesive layer 42, in place of the polyurethane resin, a polyvinyl alcohol resin can be used. The polyvinyl alcohol resin may have any resin having a vinyl alcohol unit formed by saponifying a vinyl ester unit, and examples thereof include a polyvinyl alcohol (PVA) and an ethylene-vinyl alcohol copolymer (EVOH).

Examples of PVAs include resins obtained by polymerizing vinyl esters such as vinyl acetate, vinyl formate, vinyl propionate, vinyl valerate, vinyl caprate, vinyl laurate, vinyl stearate, vinyl pivalate, and vinyl versatate alone and then saponifying them. The PVA may be a modified PVA that has been copolymerization-modified or post-modified. The modified PVA can be obtained, for example, by copolymerizing a vinyl ester with an unsaturated monomer that is copolymerizable with the vinyl ester and then saponifying it. Examples of unsaturated monomers that are copolymerizable with vinyl esters include olefins such as ethylene, propylene, isobutylene, α-octene, α-dodecene, and α-octadecene; hydroxy group-containing α-olefins such as 3-butene-1-ol, 4-pentyn-1-ol, and 5-hexene-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid; vinyl compounds such as alkyl vinyl ether, dimethyl allyl vinyl ketone, N-vinyl pyrrolidone, vinyl chloride, vinyl ethylene carbonate, 2,2-dialkyl-4-vinyl-1,3-dioxane, glycerol monoallyl ether, and 3,4-diacetoxy-1-butene; and vinylidene chloride, 1,4-diacetoxy-2-butene, and vinylene carbonate.

The degree of polymerization of PVA is, for example, 300 to 3,000. When the degree of polymerization is less than 300, the barrier properties tend to deteriorate, and when the degree of polymerization is more than 3,000, the viscosity is too high and the coating suitability tends to deteriorate. The saponification degree of PVA may be 90 mol% or more, 95 mol% or more, or 99 mol% or more. In addition, the saponification degree of PVA may be 100 mol% or less or 99.9 mol% or less. The degree of polymerization and saponification degree of PVA can be measured according to the method described in JIS K 6726 (1994).

EVOH is generally obtained by saponifying a copolymer of ethylene and an acid vinyl ester such as vinyl acetate, vinyl formate, vinyl propionate, vinyl valerate, vinyl caprate, vinyl laurate, vinyl stearate, vinyl pivalate, or vinyl versatate.

The degree of polymerization of EVOH is, for example, 300 to 3,000. When the degree of polymerization is less than 300, the barrier properties tend to deteriorate, and when the degree of polymerization is more than 3,000, the viscosity is too high and the coating suitability tends to deteriorate. The saponification degree of the vinyl ester component of EVOH

may be 90 mol% or more, 95 mol% or more, or 99 mol% or more. In addition, the saponification degree of EVOH may be 100 mol% or less or 99.9 mol% or less. The saponification degree of EVOH is determined from the peak area of hydrogen atoms contained in the vinyl ester structure and the peak area of hydrogen atoms contained in the vinyl alcohol structure when nuclear magnetic resonance (1H-NMR) measurement is performed.

The ethylene unit content of EVOH is, for example, 10 mol% or more, and may be 15 mol% or more, 20 mol% or more, or 25 mol% or more. In addition, the ethylene unit content of EVOH may be 65 mol% or less, 55 mol% or less, or 50 mol% or less. When the ethylene unit content is 10 mol% or more, favorable gas barrier properties or dimensional stability can be maintained under high humidity conditions. On the other hand, when the ethylene unit content is 65 mol% or less, the gas barrier properties can be improved. The ethylene unit content of EVOH can be determined by an NMR method.

When a polyvinyl alcohol resin is used as the adhesive layer 42, as the method of forming the adhesive layer 42, coating using a polyvinyl alcohol resin solution, multi-layer extrusion and the like may be exemplified.

[Vapor deposition layer 43]

The vapor deposition layer 43 is a layer that has gas barrier properties against water vapor and oxygen (gas barrier layer), and contains at least one of a metal or an inorganic oxide. The vapor deposition layer 43 is provided directly on the adhesive layer 42. The vapor deposition layer 43 may have a single-layer structure or a laminated structure. Therefore, the vapor deposition layer 43 includes at least one of a metal vapor deposition layer or an inorganic oxide layer. When the vapor deposition layer 43 includes a metal vapor deposition layer, examples of metals contained in the metal vapor deposition layer include aluminum and stainless steel. When the vapor deposition layer 43 includes an inorganic oxide layer, examples of inorganic oxides contained in the inorganic oxide layer include aluminum oxide, silicon oxide, magnesium oxide, and tin oxide. In consideration of transparency and barrier properties, the inorganic oxide may be selected from the group consisting of aluminum oxide, silicon oxide, and magnesium oxide. In addition, in consideration of excellent tensile elongation during processing, the inorganic oxide layer may be a layer using silicon oxide. When an inorganic oxide layer is used, strong barrier properties can be obtained with a very thin layer that does not affect recyclability of the laminate 35.

When the vapor deposition layer 43 is an inorganic oxide layer using silicon oxide, the O/Si ratio of the inorganic oxide layer is desirably 1.7 or more. When the O/Si ratio is 1.7 or more, the content of metal Si is reduced, and favorable transparency is easily obtained. In addition, the O/Si ratio may be 2.0 or less. When the O/Si ratio is 2.0 or less, it is possible to prevent the crystallinity of SiO from becoming high and the inorganic oxide layer from becoming too hard, and favorable tensile resistance is obtained. Thereby, it is possible to reduce the occurrence of cracks in the inorganic oxide layer when the barrier coat 44 is laminated. In addition, even after being formed into a packaging bag, the base 41 shrinks due to heat during a boil or retort treatment, but when the O/Si ratio is 2.0 or less, the inorganic oxide layer can easily conform to the shrinkage and deterioration of the barrier properties can be reduced. In order to obtain these effects more sufficiently, the O/Si ratio of the inorganic oxide layer may be 1.75 or more and 1.9 or less, and may be 1.8 or more and 1.85 or less.

When the vapor deposition layer 43 is an inorganic oxide layer using silicon oxide, the O/Si ratio of the inorganic oxide layer can be determined by X-ray photoelectron spectroscopy (XPS). For example, using an X-ray photoelectron spectrometer (product name: JPS-90MXV, commercially available from JEOL Ltd.) as the measurement device, and a non-monochromatic MgK$\alpha$ (1253.6 eV) as the X-ray source, measurement can be performed with an X-ray output of 100 W (10 kV-10 mA). In quantitative analysis for determining the O/Si ratio, relative sensitivity factors of 2.28 for O1s and 0.9 for Si2p can be used.

The thickness of the vapor deposition layer 43 is, for example, 5 nm or more and 80 nm or less. When the thickness of the vapor deposition layer 43 is 5 nm or more, it is possible to obtain sufficient water vapor barrier properties. In addition, when the thickness of the vapor deposition layer 43 is 80 nm or less, it is possible to reduce the occurrence of cracks due to deformation caused by internal stress of the thin film and it is possible to reduce deterioration of water vapor barrier properties. Here, when the thickness of the vapor deposition layer 43 is more than 80 nm, this is economically not preferable because cost is likely to increase due to an increase in the amount of material used, a prolonged film formation time. For the same reason, the thickness of the vapor deposition layer 43 may be 20 nm or more and 40 nm or less.

The vapor deposition layer 43 can be formed by, for example, vacuum film formation. In the vacuum film formation, a physical vapor deposition method or a chemical vapor deposition method can be used. Examples of physical vapor deposition methods include a vacuum deposition method, a sputtering method, and an ion plating method, but the present disclosure is not limited thereto. Examples of chemical vapor deposition methods include a thermal CVD method, a plasma CVD method, and a photo CVD method, but the present disclosure is not limited thereto.

In the vacuum film formation, a resistance heating type vacuum deposition method, an electron beam (EB) heating type vacuum deposition method, an induction heating type vacuum deposition method, a sputtering method, a reactive sputtering method, a dual magnetron sputtering method, a plasma-enhanced chemical vapor deposition method (PECVD method) and the like may be used. However, in consideration of productivity, the vacuum deposition method may currently be the best method. As the vacuum deposition type heating method, any of an electron beam heating method, a

resistance heating method, and an induction heating method may be used.

[Barrier coat 44]

The barrier coat 44 is a coating layer having gas barrier properties (gas barrier coating layer), and is provided on the base 41. The barrier coat 44 is, for example, a layer formed using a composition for forming a gas barrier coating layer (hereinafter referred to as a coating agent) containing at least one selected from the group consisting of a hydroxyl group-containing polymer compound, a metal alkoxide, a silane coupling agent, and a hydrolysate thereof.

In order to more sufficiently maintain the gas barrier properties after the hot water treatment such as a retort treatment, the coating agent may contain at least a silane coupling agent or a hydrolysate thereof, may contain at least one selected from the group consisting of a hydroxyl group-containing polymer compound, a metal alkoxide and a hydrolysate thereof and a silane coupling agent or a hydrolysate thereof, or may contain a hydroxyl group-containing polymer compound or a hydrolysate thereof, a metal alkoxide or a hydrolysate thereof, and a silane coupling agent or a hydrolysate thereof. The coating agent can be prepared, for example, by mixing a solution in which a hydroxyl group-containing polymer compound, which is a water-soluble polymer, is dissolved in an aqueous solvent (water or a water/alcohol mixture) directly with a metal alkoxide and a silane coupling agent or with one after undergoing a treatment such as pre-hydrolysis.

Components contained in the coating agent for forming the barrier coat 44 will be described in detail. Examples of hydroxyl group-containing polymer compounds used in the coating agent include polyvinyl alcohol, polyvinylpyrrolidone, starch, methylcellulose, carboxymethylcellulose, and sodium alginate. Among these, when polyvinyl alcohol (PVA) is used as the coating agent for the barrier coat 44, the gas barrier properties tend to be particularly excellent.

In order to obtain excellent gas barrier properties, the barrier coat 44 may be formed from a composition containing at least one selected from the group consisting of metal alkoxides represented by General Formula (I) shown in the above embodiment and hydrolysates thereof.

Specific examples of metal alkoxides include tetraethoxysilane [$Si(OC_2H_5)_4$] and triisopropoxyaluminum [$Al(O\text{-}2'\text{-}C_3H_7)_3$]. Tetraethoxysilane and triisopropoxyaluminum tend to be relatively stable in an aqueous solvent after hydrolysis.

Examples of silane coupling agents include compounds represented by General Formula (II) shown in the above embodiment.

Specific examples of silane coupling agents include silane coupling agents such as vinyltrimethoxysilane, γ-chloropropylmethyldimethoxysilane, γ-chloropropyltrimethoxysilane, glycidoxypropyltrimethoxysilane, γ-methacryloxy-propyltrimethoxysilane, and γ-methacryloxypropylmethyldimethoxysilane.

In addition, the silane coupling agent may be a multimers formed by polymerizing the compound represented by General Formula (II). The multimers may be a trimer or 1,3,5-tris(3-trialkoxysilylalkyl)isocyanurate. This is a condensation polymer of 3-isocyanatoalkylalkoxysilane. It is known that this 1,3,5-tris(3-trialkoxysilylalkyl)isocyanurate has no chemical reactivity in the isocyanate moiety, but the reactivity is maintained due to the polarity of the nurate moiety. Generally, it is added to an adhesive in the same manner as 3-isocyanatoalkylalkoxysilane, and is known as an adhesion improving agent. Therefore, when 1,3,5-tris(3-trialkoxysilylalkyl)isocyanurate is added to the hydroxyl group-containing polymer compound, the water resistance of the gas barrier coating layer can be improved by hydrogen bonds. While 3-socyanatoalkylalkoxysilane has high reactivity and has low liquid stability, 1,3,5-tris(3-trialkoxysilylalkyl)isocyanurate is not water-soluble in the nurate moiety due to its polarity, but it is easily dispersed in an aqueous solution and can maintain a stable liquid viscosity. In addition, the water resistance performances of 3-isocyanatoalkylalkoxysilane and 1,3,5-tris(3-trialkoxysilylalkyl)isocyanurate are the same.

1,3,5-tris(3-trialkoxysilylalkyl)isocyanurate may be produced by thermal condensation of 3-isocyanatopropylalkoxysilane, and may contain the raw material 3-isocyanatopropylalkoxysilane, but there is no particular problem. 1,3,5-tris(3-trialkoxysilylpropyl)isocyanurate or 1,3,5-tris(3-trimethoxysilylpropyl)isocyanurate may be used. This methoxy group has a fast hydrolysis speed, and those containing a propyl group are available relatively inexpensively and thus 1,3,5-tris(3-trimethoxysilylpropyl)isocyanurate is practically advantageous.

In addition, as necessary, an isocyanate compound or known additives such as a dispersant, a stabilizer, a viscosity adjusting agent, and a coloring agent can be added to the coating agent as long as the gas barrier properties are not impaired.

The thickness of the barrier coat 44 may be 50 to 1,000 nm or 100 to 500 nm. When the thickness of the barrier coat 44 is 50 nm or more, there is a tendency for the gas barrier properties to be able to be obtained more sufficiently, and when the thickness is 1,000 nm or less, there is a tendency for sufficient flexibility to be able to be maintained.

The coating solution for forming the barrier coat 44 can be applied by, for example, a dipping method, a roll coating method, a gravure coating method, a reverse gravure coating method, an air knife coating method, a comma coating method, a die coating method, a screen printing method, a spray coating method, a gravure offset method or the like. The coating film obtained by applying the coating solution can be dried by, for example, a hot air drying method, a hot roll drying method, a high frequency emission method, an infrared emission method, a UV emission method, or a combination

thereof.

The temperature at which the coating film is dried may be, for example, a temperature of 50 to 150°C, or a temperature of 70 to 100°C. When the temperature during drying is within the above range, it is possible to further reduce the occurrence of cracks in the vapor deposition layer 43 and the barrier coat 44, and it is possible to exhibit excellent barrier properties.

The barrier coat 44 may be formed using a coating agent containing a polyvinyl alcohol resin and a silane compound. As necessary, an acid catalyst, an alkali catalyst, a photopolymerization initiator and the like may be added to the coating agent.

The polyvinyl alcohol resin is as described above. In addition, examples of silane compounds include silane coupling agents, polysilazane, and siloxane, and specific examples thereof include tetramethoxysilane, tetraethoxysilane, glycidoxypropyltrimethoxysilane, acryloxypropyltrimethoxysilane, and hexamethyldisilazane.

[Printed layer]

The laminate 35 may include a printed layer. The printed layer may be provided, for example, on at least one surface of the base 41. The printed layer is provided at a position visible from the outside of the laminate 35 in order to display information about the contents, identify the contents, improve concealment, or improve design properties of the packaging bag. The printing method and printing ink are not particularly limited, and are appropriately selected from among known printing methods and printing inks in consideration of printability on the film and design properties such as a color tone, and adhesion, safety as a food container. As the printing method, for example, a gravure printing method, an offset printing method, a gravure offset printing method, a flexographic printing method, an inkjet printing method can be used. Among these, the gravure printing method is highly likely to be used in consideration of productivity and high definition of images.

In order to improve the adhesion of the printed layer, the surface of the layer on which the printed layer is provided may be subjected to various pretreatments such as a corona treatment, a plasma treatment, and a flame treatment, and the coating layer such as an easy-adhesive layer may be provided.

[Sealant layer 50]

The sealant layer 50 is a layer that imparts sealing properties by heat sealing in the laminate 35. In consideration of recycling suitability of the laminate 35 and the like, the sealant layer 50 is a polyolefin film like the base 41. In the present embodiment, the sealant layer 50 is a resin layer having a single-layer structure and mainly made of a polypropylene, but the present disclosure is not limited thereto. The sealant layer 50 may include a polypropylene film or may be made of a polypropylene film.

The polypropylene film may be an acid-modified polypropylene film obtained by graft-modifying polypropylene with an unsaturated carboxylic acid, an anhydride of an unsaturated carboxylic acid, an ester of an unsaturated carboxylic acid. In addition, as the polypropylene, polypropylene resins such as a homo polypropylene resin (PP), a propylene-ethylene random copolymer, a propylene-ethylene block copolymer, and a propylene-$\alpha$ olefin copolymer can be used.

The polypropylene film constituting the sealant layer 50 may be a cast polypropylene film in order to improve sealing properties by heat sealing.

Various additives such as a flame retardant, a slip agent, an antiblocking agent, an antioxidant, a light stabilizer, a tackifier, and an antistatic agent may be added to the polypropylene film constituting the sealant layer 50.

The thickness of the sealant layer 50 is determined depending on the mass of the contents, the shape of the packaging bag, and the like, but the thickness may be about 30 to 150 $\mu$m or the thickness may be 50 to 80 $\mu$m.

Regarding the method of forming the sealant layer 50, any of known lamination methods such as a dry lamination method in which a film-like sealant layer made of the above polypropylene is bonded with an adhesive such as a one-component curing type or two-component curing type urethane adhesive, a non-solvent dry lamination method in which a film-like sealant layer is bonded using a solvent-free adhesive, and an extrusion lamination method in which the above polypropylene is heated and melted, extruded into a curtain shape, and bonded can be used for formation.

Among the above formation methods, the dry lamination method has high resistance to the retort treatment, particularly a high-temperature hot water treatment at 120°C or higher. On the other hand, if the packaging bag is used for the treatment at a temperature of 85°C or lower, the lamination method is not particularly limited.

[Adhesive layer 60]

The adhesive layer 60 is a layered member that bonds the barrier layer 40 and the sealant layer 50. As the material of the adhesive contained in the adhesive layer 60, for example, a polyester-isocyanate resin, a urethane resin, a polyether resin and the like can be used. In order to use the packaging bag for retort applications, a two-component curing

type urethane adhesive which has retort resistance can be used. Here, in consideration of environmental consideration, the adhesive may not contain 3-glycidyloxypropyltrimethoxysilane (GPTMS). The adhesive layer 60 may not contain chlorine. In this case, it is possible to reduce coloring of the adhesive forming the adhesive layer 60 and recycled resins after recycling and the occurrence of odors due to the heat treatment. In consideration of environmental consideration, the adhesive layer 60 may be formed of a biomass material and may not contain a solvent.

The thickness of the adhesive layer 60 is 0.5 μm or more and 10 μm or less. When the thickness of the adhesive layer 60 is 0.5 μm or more, it is possible to effectively prevent peeling off between the barrier layer 40 and the sealant layer 50. When the thickness of the adhesive layer 60 is 10 μm or less, the laminate 35 can be easily made into a mono-material (details will be described below). The thickness of the adhesive layer 60 may be 1 μm or more, 2 μm or more, 8 μm or less, 6 μm or less, or 5 μm or less.

[Content of polyolefins]

The total mass proportion of polyolefins (in the present embodiment, polypropylene) in the laminate 35 is 90 mass% or more. Thereby, the laminate 35 can be called a (mono-material) packaging material made of a single material and has excellent recyclability. In order to further improve recyclability, the content of polyolefins in the laminate 35 based on a total amount of the laminate 35 may be 92.5 mass% or more, and may be 95 mass% or more.

[Heat shrinkage rate of base 41]

After the base 41 is exposed to 120°C for 15 minutes (hereinafter simply referred to as "after heating"), the heat shrinkage rate of the base 41 in the MD direction calculated by Formula (1) described in the first embodiment is 1% or more. For example, after the base 41 or the barrier layer 40 including the base 41 is heated in an oven at 120°C for 15 minutes, the heat shrinkage rate of the base 41 in the MD direction calculated by the following Formula (1) is 1% or more. In order to reduce deformation during bag production and prevent peeling off between the barrier layer 40 and the sealant layer 50, the heat shrinkage rate in the MD direction is, for example, 12% or less, 11% or less, 10% or less, 9% or less, 8% or less, or 7% or less. Here, for example, the heat shrinkage rate of the biaxially oriented polypropylene film is 1%, and the heat shrinkage rate of the PET film is less than 1%.

After the above heating, the heat shrinkage rate of the base 41 in the TD direction calculated by Formula (2) described in the first embodiment is not particularly limited, and is, for example, 1% or more. In order to reduce deformation during bag production and prevent peeling off between the barrier layer 40 and the sealant layer 50, the heat shrinkage rate in the TD direction is, for example, 12% or less, 11% or less, 10% or less, 9% or less, 8% or less, or 7% or less.

[Hardness of adhesive layer 60]

In consideration of the above heat shrinkage rate of the base 41, in the present embodiment, after a retort treatment is performed on the laminate 35, the hardness of the adhesive layer 60 is 0.1 MPa or more and less than 0.9 MPa. In this case, the adhesive layer 60 can favorably conform to expansion and contraction of the base 41 due to the heat treatment such as a retort treatment or a boil treatment. Therefore, even if the heat treatment is performed on the laminate 35 including the base 41 having the above heat shrinkage rate, peeling off between the barrier layer 40 and the sealant layer 50 is unlikely to occur. In addition, the occurrence of cracks in the adhesive layer 60 during cooling after the heat treatment and the occurrence of damage to the barrier layer 40 (at least one of the adhesive layer 42, the vapor deposition layer 43 or the barrier coat 44) caused by the occurrence of cracks are reduced. The hardness of the adhesive layer 60 before the retort treatment is performed is not particularly limited, and is, for example, 1.0 MPa or more.

The hardness of the adhesive layer 60 can be controlled by the adhesive material, the amount of the curing agent, the aging time and the like. As the distance between adhesive molecular chains is narrower, the adhesive layer 60 tends to be harder. As the adhesive is bulkier, the adhesive layer 60 tends to be softer. The hardness of the aliphatic adhesive layer 60 tends to be harder than that of the alicyclic or aromatic adhesive layer 60. The hardness of the alicyclic adhesive layer 60 tends to be harder than that of the aromatic adhesive layer 60. As the amount of the curing agent contained in the adhesive layer 60 is larger, the adhesive layer 60 tends to be harder. As the aging time is longer, the adhesive layer 60 tends to be harder.

The hardness of the adhesive layer 60 in the laminate 35 is obtained by measuring the hardness of a part (exposed part) exposed from the sealant layer 50. Removal of the sealant layer 50 to expose the adhesive layer 60 is performed using, for example, a diagonal cutting device. In the present embodiment, the hardness of the adhesive layer 60 is measured by the nano-indentation method. The nano-indentation method is a measurement method in which a quasi-static indentation test is performed on a target measurement object (sample) using an indenter to acquire mechanical properties of a sample. The hardness of the sample such as the adhesive layer 60 is calculated by, for example, the following method. First, a fused quartz standard sample is tested in advance to calibrate the relationship between the

contact depth and the contact projection area between the indenter and the sample. Then, the unload curve in the region of 20 to 95% of the maximum load during unloading is analyzed by the Oliver-Pharr method, and the hardness of the sample is calculated.

<Packaging bag>

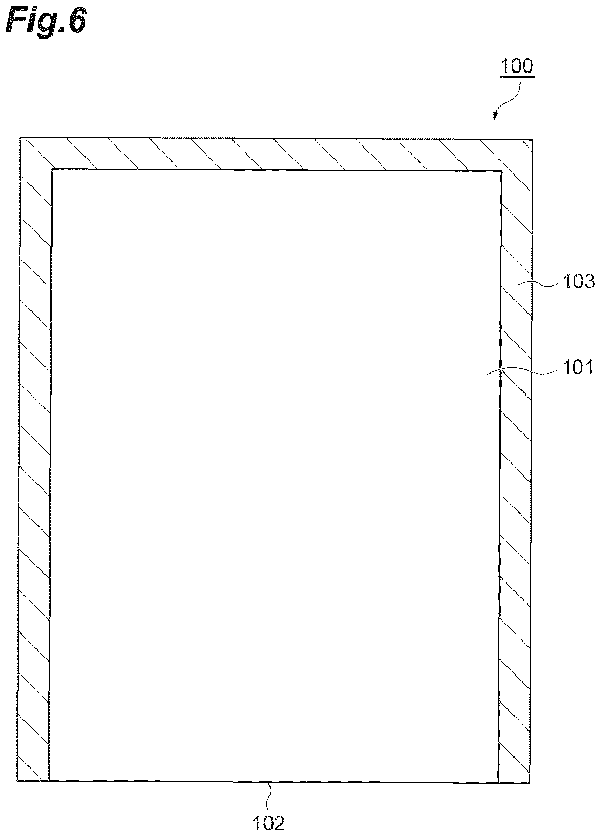

Hereinafter, an example of a packaging bag which is a bag-making product of the laminate 35 will be described with reference to FIG. 6. FIG. 6 is a schematic plan view of an example of a packaging bag. A packaging bag 100 shown in FIG. 6 is formed into a bag shape, for example, by sealing the ends of the laminate 35 that has been folded in half with the contents therebetween.

The packaging bag 100 is a three-sided bag having a main body part 101 in which the contents are accommodated, a sealed part 102 that is positioned at the end of the main body part 101, and a folded part 103 where the laminate 35 is folded. The shape of the main body part 101 is not particularly limited, and may be, for example, a rectangle when viewed from a predetermined direction. At least a part of the outer surface of the main body part 101 may be printed. In the main body part 101, in addition to the contents, for example, a specific gas such as nitrogen may be accommodated. The sealed part 102 is a part in which a part of the sealant layer 50 of the laminate 35 is bonded to another part. In the sealed part 102, a part of the sealant layer 50 of the laminate 35 is in close contact with another part. The sealed part 102 is formed, for example, by heating and compressing (that is, heat sealing) a part of the sealant layer 50 of the laminate 35 and another part, but the present disclosure is not limited thereto. For example, the sealed part 102 may be formed by cold sealing. In the packaging bag 100, the folded part 103 forms one side of the main body part 101, and the sealed part 102 forms the remaining three sides of the main body part 101. Both ends of the folded part 103 overlap the sealed part 102.

After a retort treatment is performed on the laminate 35 according to the present embodiment described above, the hardness of the adhesive layer 60 measured by the nano-indentation method is 0.1 MPa or more and less than 0.9 MPa. Thereby, when the base 41 having a heat shrinkage rate in the MD direction of 1% or more is used, even if the base 41 expands and contracts due to the retort treatment, the adhesive layer 60 favorably conforms to the expansion and contraction. Therefore, it is possible to reduce the occurrence of damage to the barrier coat 44 caused by the occurrence of cracks in the adhesive layer 60. Therefore, it is possible to provide the laminate 35 that can exhibit favorable gas barrier properties (particularly, oxygen transmission prevention performance) even after the retort treatment.

In an example, the barrier layer 40 includes the adhesive layer 42 and the vapor deposition layer 43, which are positioned between the base 41 and the barrier coat 44, and the adhesive layer 42 is positioned between the base 41 and the vapor deposition layer 43. Therefore, compared to when the barrier layer includes only the base 41 and the barrier coat 44, it is possible to improve the gas barrier properties of the laminate 35.

In an example, the thickness of the vapor deposition layer 43 may be 5 nm or more and 80 nm or less. In this case, it is possible to prevent cracks in the vapor deposition layer 43 and improve the gas barrier properties.

In an example, the thickness of the adhesive layer 60 may be 0.5 μm or more and 10 μm or less. In this case, it is possible to effectively prevent peeling off between the barrier layer 40 and the sealant layer 50, and the laminate 35 can be easily made into a mono-material.

In an example, each of the base 41 and the sealant layer 50 may be a polyolefin film, and the total mass proportion of polyolefins in the laminate 35 may be 90 mass% or more. In this case, a mono-material structure is realized.

In an example, the base 41 may be an oriented polypropylene film, and the sealant layer 50 may be a cast polypropylene film. In this case, the laminate 35 has excellent heat resistance against the retort treatment.

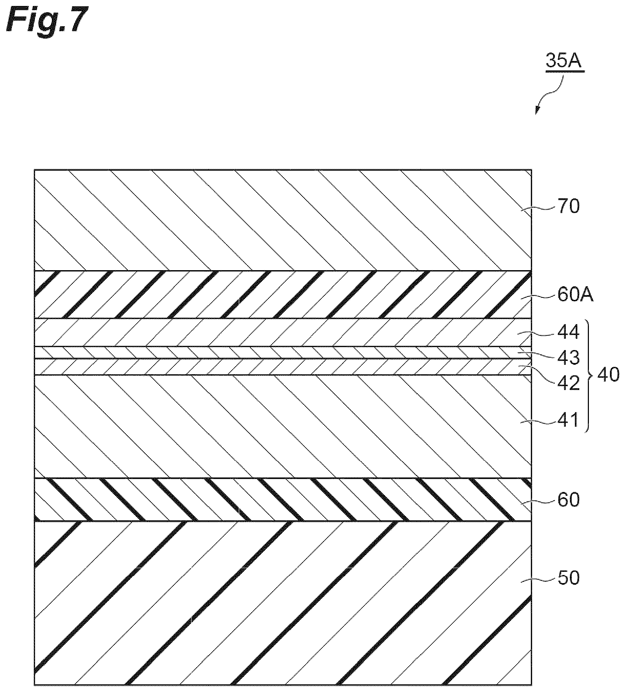

Next, a modified example of a second embodiment will be described with reference to FIG. 7. Hereinafter, descriptions of things that are the same as in the above embodiment will be omitted, and only differences from the above embodiment will be described. That is, to the extent technically possible, descriptions of the above embodiment may be appropriately used in the modified example.

FIG. 7 is a schematic cross-sectional view showing a laminate according to a modified example. As shown in FIG. 7, a laminate (packaging film) 35A includes an outermost layer 70 that overlaps the barrier layer 40 and a second adhesive layer 60A that bonds the outermost layer 70 and the barrier layer 40, in addition to the barrier layer 40, the sealant layer 50 and the adhesive layer 60. In the modified example, the sealant layer 50, the adhesive layer 60, the barrier layer 40, the second adhesive layer 60A, and the outermost layer 70 are laminated in this order. In addition, the adhesive layer 60, the base 41, the adhesive layer 42, the vapor deposition layer 43, the barrier coat 44, the second adhesive layer 60A, and the outermost layer 70 are laminated in this order. Therefore, the adhesive layer 60 bonds the base 41 and the sealant layer 50, and the second adhesive layer 60A bonds the barrier coat 44 and the outermost layer 70. In this modified example, the barrier layer 40 functions as an intermediate layer in the laminate 35A.

[Outermost layer 70]

The outermost layer 70 is a plastic member that functions as the outermost member in the laminate 35A. The

outermost layer 70 has the same function and performance as the base 41. For example, the thickness of the outermost layer 70 is approximately the same as the thickness of the base 41. In consideration of recycling suitability of the laminate 35A, the outermost layer 70 is, for example, a polyolefin film. In consideration of heat resistance, the outermost layer 70 may include a polypropylene film or may be made of a polypropylene film.

In this modified example, after the outermost layer 70 is exposed to 120°C for 15 minutes, the heat shrinkage rate of the outermost layer 70 in the MD direction calculated by Formula (1) is 1% or more. For example, after the outermost layer 70 or a laminate of the outermost layer 70 and the barrier layer 40 is heated in an oven at 120°C for 15 minutes, the heat shrinkage rate of the outermost layer 70 in the MD direction calculated by Formula (1) is 1% or more. The heat shrinkage rate in the MD direction is, for example, 12% or less, 11% or less, 10% or less, 9% or less, 8% or less, or 7% or less.

After the above heating, the heat shrinkage rate of the outermost layer 70 in the TD direction calculated by Formula (2) is not particularly limited, and is, for example, 1% or more and 12% or less.

[Second adhesive layer 60A]

The second adhesive layer 60A is a layered member that bonds the barrier layer 40 and the outermost layer 70. The material of the adhesive contained in the second adhesive layer 60A is the same as the material of the adhesive contained in the adhesive layer 60. The thickness of the second adhesive layer 60A is the same as the thickness of the adhesive layer 60, and is 0.5 μm or more and 10 μm or less. In this modified example, after a retort treatment is performed on the laminate 35A, the hardness of the second adhesive layer 60A is 0.1 MPa or more and less than 0.9 MPa. In this case, the second adhesive layer 60A can favorably conform to expansion and contraction of the outermost layer 70 due to the heat treatment such as a retort treatment or a boil treatment. Therefore, even if the heat treatment is performed on the laminate 35A including the second adhesive layer 60A having the above heat shrinkage rate, peeling off between the barrier layer 40 and the outermost layer 70 is unlikely to occur. In addition, the occurrence of cracks in the second adhesive layer 60A during cooling after the heat treatment and the occurrence of damage to the barrier layer 40 (at least one of the adhesive layer 42, the vapor deposition layer 43 or the barrier coat 44) caused by the occurrence of cracks are reduced. The hardness of the second adhesive layer 60A before the retort treatment is performed is not particularly limited, and is, for example, 1.0 MPa or more.

The hardness of the second adhesive layer 60A can be controlled by the adhesive material, the amount of the curing agent, the aging time. As the distance between adhesive molecular chains is narrower, the second adhesive layer 60A tends to be harder. As the adhesive is bulkier, the second adhesive layer 60A tends to be softer. The hardness of the aliphatic second adhesive layer 60A tends to be harder than that of the alicyclic or aromatic second adhesive layer 60A. The hardness of the alicyclic second adhesive layer 60A tends to be harder than that of the aromatic second adhesive layer 60A. As the amount of the curing agent contained in the second adhesive layer 60A is larger, the second adhesive layer 60A tends to be harder. As the aging time is longer, the second adhesive layer 60A tends to be harder.

Also in the above modified example described above, the same operational effects as those of the second embodiment are exhibited. In addition, the barrier layer 40 can be protected with the outermost layer 70.

In the second embodiment and its modified example, the total mass proportion of polypropylene in the laminate may be 90 mass% or more. Therefore, for example, in the laminate according to the modified example, the mass proportion of polypropylene in either the base or the outermost layer may be less than 90 mass%. Alternatively, in the laminate, the mass proportion of polypropylene in the barrier layer may be less than 90 mass%.

In the second embodiment and its modified example, the anchor coat layer and the vapor deposition layer are provided on the base, but the present disclosure is not limited thereto. For example, the vapor deposition layer may be provided on the sealant layer. In this case, the anchor coat layer may be provided between the sealant layer and the vapor deposition layer. In this case, the sealant layer and the anchor coat layer may be co-extruded layers. Alternatively, the anchor coat layer and the vapor deposition layer may be provided on the base, and the vapor deposition layer may be provided on the sealant layer. Alternatively, the anchor coat layer may not be provided.

[Examples]

The present disclosure will be described below in more detail with reference to examples, but the present disclosure is not limited to these examples. First, Examples 5 and 6 are according to the present invention, examples 1-4,7-38 are not according to the present invention), Comparative Examples 1 to 3, and Reference Examples 1 to 3 will be described.

<Production of gas barrier film>

(Example 1)

An ethylene-1-butene-propylene random copolymer resin (ethylene content: 2.5 mol%, 1-butene content: 3.5 mol%) was prepared as the material of the skin layer, and a homo polypropylene resin was prepared as the material of the core layer. These resins were co-extruded and then biaxially stretched to produce a base film (base layer) with a total thickness of 20 μm. The thickness of the skin layer was 0.7 μm, and the thickness of the core layer was 19.3 μm.

An acrylic primer solution was applied onto the skin layer of the base layer by gravure coating and dried to form an anchor coat layer with a thickness of 0.1 μm. Next, reactive vapor deposition was performed by high frequency excitation ion plating in an oxygen atmosphere under a reduced pressure, and a silicon oxide thin film with a thickness of 30 nm was vapor-deposited on the anchor coat layer to form a vapor deposition layer made of an inorganic oxide.

Tetraethoxysilane (hereinafter referred to as "TEOS"), methanol and 0.1 N hydrochloric acid were mixed at a mass ratio of 45/15/40 to obtain a TEOS hydrolyzed solution. This solution was mixed with an aqueous solution containing 5 mass% of a polyvinyl alcohol (hereinafter referred to as "PVA"), and a solution obtained by diluting 1,3,5-tris(3-methoxysilylpropyl)isocyanurate with a solution containing water/IPA (isopropyl alcohol) at a mass ratio of 1/1 so that the solid content was 5 mass% (in terms of $R^2Si(OH)_3$) to prepare a coating solution (composition for forming a gas barrier coating layer). The coating solution was prepared so that the mass ratio of the $SiO_2$ solid content (converted value) of TEOS, the $R^2Si(OH)_3$ solid content (converted value) of isocyanurate silane, and the PVA solid content was 40/5/55. This coating solution was applied onto the vapor deposition layer by a gravure coating method and then dried under conditions of 80°C and 60 seconds to form a gas barrier coating layer with a thickness of 0.3 μm.

Accordingly, a gas barrier film of Example 1 having a laminated structure of the gas barrier coating layer/vapor deposition layer/anchor coat layer/skin layer/core layer was obtained.

(Example 2)

A gas barrier film was obtained in the same operation as in Example 1 except that an ethylene-propylene random copolymer resin (ethylene content: 5.0 mol%) was used as the material of the skin layer.

(Example 3)

A gas barrier film was obtained in the same operation as in Example 1 except that an ethylene-propylene random copolymer resin (ethylene content: 3.2 mol%) was used as the material of the skin layer.

(Example 4)

A gas barrier film was obtained in the same operation as in Example 1 except that an ethylene-propylene random copolymer resin (ethylene content: 7.5 mol%) was used as the material of the skin layer.

(Comparative Example 1)

A gas barrier film was obtained in the same operation as in Example 1 except that no skin layer was formed and a base film with only a core layer was used.

(Comparative Example 2)

A gas barrier film was obtained in the same operation as in Example 1 except that an ethylene-1-butene-propylene random copolymer resin (ethylene content: 5 mol%, 1-butene content: 6 mol%) was used as the material of the skin layer.

(Comparative Example 3)

A gas barrier film was obtained in the same operation as in Example 1 except that an ethylene-propylene random copolymer resin (ethylene content: 0.5 mol%) was used as the material of the skin layer.

<Production of packaging film>

A cast polypropylene film with a thickness of 60 μm was laminated on the side of the gas barrier coating layer of the gas barrier film produced in each example with a two-component curing type urethane adhesive therebetween by a dry lamination method. Thereby, a packaging film was obtained.

(Example 5)

An ethylene-1-butene-propylene random copolymer resin (ethylene content: 2.5 mol%, 1-butene content: 3.5 mol%) was prepared as the material of the first skin layer, a homo polypropylene resin was used as the material of the core layer, and an ethylene-propylene random copolymer resin (ethylene content: 7.5 mol%) was prepared as the material of the second skin layer. These resins were co-extruded and then biaxially stretched to produce a base film (base layer) with a total thickness of 20 μm. The thicknesses of the first skin layer and the second skin layer were both 0.7 μm, and the thickness of the core layer was 18.6 μm.

Next, respective layers were laminated on the first skin layer of the base layer in the same operation as in Example 1 to obtain a gas barrier film of Example 5 having a laminated structure of the gas barrier coating layer/vapor deposition layer/anchor coat layer/first skin layer/core layer/second skin layer.

(Example 6)

A gas barrier film was obtained in the same operation as in Example 5 except that an ethylene-propylene random copolymer resin (ethylene content: 5.6 mol%) was used as the material of the second skin layer.

(Example 7)

A gas barrier film was obtained in the same operation as in Example 1 except that a corona treatment was performed on the surface opposite to the surface of the core layer on which the first skin layer was laminated.

(Reference Example 1)

A gas barrier film was obtained in the same operation as in Example 6 except that a homo polypropylene resin was used as the material of the second skin layer.

(Reference Example 2)

A gas barrier film was obtained in the same operation as in Example 6 except that an ethylene-propylene random copolymer resin (ethylene content: 0.7 mol%) was used as the material of the second skin layer.

(Reference Example 3)

A gas barrier film was obtained in the same operation as in Example 6 except that an ethylene-1-butene-1-propylene random copolymer resin (ethylene content: 5 mol%, 1-butene content: 6 mol%) was used as the material of the second skin layer.

<Production of packaging film>

An oriented polypropylene film with a thickness of 20 μm was laminated on the side of the gas barrier coating layer of the gas barrier film produced in each example with a two-component curing type urethane adhesive therebetween by a dry lamination method. In addition, a cast polypropylene film with a thickness of 60 μm was laminated on the side of the base layer of the gas barrier film with a two-component curing type urethane adhesive therebetween by a dry lamination method. Thereby, a packaging film was obtained.

(Example 8)

A gas barrier film was obtained in the same operation as in Example 1 except that a water-based polyurethane resin (Takelac WPB-341, commercially available from Mitsui Chemicals, Inc.) was applied onto the skin layer of the base layer by gravure coating and dried to form an anchor coat layer with a thickness of 1.5 μm.

(Example 9)

A gas barrier film was obtained in the same operation as in Example 1 except that the thickness of the skin layer was 0.3 μm and the thickness of the core layer was 19.7 μm.

(Example 10)

A gas barrier film was obtained in the same operation as in Example 1 except that the thickness of the skin layer was 1.5 μm, the thickness of the core layer was 16.5 μm, and the thickness of the anchor coat layer was 1.1 μm.

(Example 11)

A gas barrier film was obtained in the same operation as in Example 1 except that the material of the skin layer was a butenepropylene random copolymer resin (butene content: 2.5 mol%), the thickness of the skin layer was 0.7 μm, and the thickness of the anchor coat layer was 2.1 μm.

(Example 12)

A gas barrier film was obtained in the same operation as in Example 1 except that the material of the skin layer was a butenepropylene random copolymer resin (butene content: 1.0 mol%), the thickness of the skin layer was 0.7 μm, and the thickness of the anchor coat layer was 3.1 μm.

(Example 13)

A gas barrier film was obtained in the same operation as in Example 1 except that the thickness of the anchor coat layer was 4.1 μm, and the coating solution (composition for forming a gas barrier coating layer) was prepared so that the mass ratio of the $SiO_2$ solid content (converted value) of TEOS, the $R^2Si(OH)_3$ solid content (converted value) of isocyanurate silane, and the PVA solid content was 45/10/45.

(Example 14)

A gas barrier film was obtained in the same operation as in Example 1 except that the thickness of the anchor coat layer was 5.1 μm and the coating solution (composition for forming a gas barrier coating layer) was prepared so that the mass ratio of the $SiO_2$ solid content (converted value) of TEOS, the $R^2Si(OH)_3$ solid content (converted value) of isocyanurate silane, and the PVA solid content was 45/7/48.

<Production of packaging film>

A cast polypropylene film with a thickness of 60 μm was laminated on the side of the gas barrier coating layer of the gas barrier film produced in each example with a two-component curing type urethane adhesive therebetween by a dry lamination method. Thereby, a packaging film was obtained.

<Evaluation>

(Production of sample for measurement by nano-indentation method)

The front and back surfaces of the gas barrier film produced in each example were each subjected to a corona treatment at 0.20 kW (device: corona treatment system CT-0212, commercially available from Kasuga Denki, Inc.) and the film was then cut into a wedge shape with a base of 1.0 mm×a height of 5.0 mm using a razor.

The cut film was embedded in a photocurable resin and cured with a halogen lamp KTX-100R (commercially available from Kenko Tokina Corporation). As the photocurable resin, D-800 (commercially available from Toagosei Co., Ltd.) was used.

The photocured film embedding resin was fixed with an insert for an AFM sample holder, and the cross section of the film was cut with a glass knife at room temperature (25°C). Then, the final cross-section cutting was performed with a diamond knife at room temperature with settings of a cutting speed of 1.0 mm/s and a cutting layer thickness of 100 nm, and cutting was completed when a mirror surface was obtained. As cross-sectional cutting devices, an ultramicrotome (EM UC7, commercially available from Leica Microsystems) and a cryo system (EM FC7, commercially available from Leica Microsystems) were used. In addition, the cutting direction of the knife was parallel to the layer interface.

(Measurement by nano-indentation method)

A Hysitron TI-Premier (product name, commercially available from Bruker Japan) was used as a measurement device, and a Berkovich type diamond indenter (commercially available from Bruker Japan) was used as an indenter.

The measurement by the nano-indentation method was performed by performing, in a displacement control mode, indentation to a depth of 30 nm at an indentation speed of 30 nm/sec, then holding at the maximum depth for 1 second, and then unloading at a speed of 30 nm/sec.

The measurement was performed by acquiring a shape image of a cross section of a sample using a shape measurement function of a measurement device that scans the surface of the sample with an indenter, and specifying 20 points at intervals of 1 μm or more on a desired layer from the shape image.

When the hardness and the composite elastic modulus were calculated, a fused quartz standard sample was tested in advance to calibrate the relationship between the contact depth and the contact projection area between the indenter and the sample. Then, the unload curve in the region of 60 to 95% of the maximum load during unloading was analyzed by the Oliver-Pharr method, and the hardness and the composite elastic modulus were calculated.

(Retort treatment)

The packaging film produced in each example was used to produce a packaging bag with four sealed sides. The packaging bag was filled with water as the contents. Then, the retort sterilization treatment was performed at 130°C for 30 minutes.

(Measurement of oxygen transmission rate)

The oxygen transmission rate of the packaging film after the retort treatment was measured. The measurement was performed using an oxygen transmission rate measurement device (OXTRAN 2/20, commercially available from Modern Control) under conditions of a temperature of 30°C and a relative humidity of 70%. The measurement method was performed according to JIS K-7126, the method B (isobaric method), and ASTM D3985-81, and the measured value was expressed as the unit [$cm^3$(STP)/$m^2$·day·atm].

(Measurement of lamination strength)

For the packaging film after the retort treatment, the lamination strength between the gas barrier film and the cast polypropylene film was measured. The measurement was performed according to JIS K 6854 at a test width of 15 mm, a peel speed of 300 mm/min, and a peel angle of 180 degrees. The measured value was expressed as the unit [N/15 mm]. Here, in Examples 1 to 4 and Comparative Examples 1 to 3, the lamination strength between the first skin layer and the cast polypropylene film was measured. In Examples 5 to 7 and Reference Examples 1 to 3, the lamination strength between the second skin layer and the cast polypropylene film was measured.

Tables 1 to 6 show the conditions of the examples and the evaluation results of the examples. In the tables, "EBP" indicates an ethylene-1-butene-propylene random copolymer resin, "EP" indicates an ethylene-propylene random copolymer resin, "BP" indicates a butenepropylene random copolymer resin, "HPP" indicates a homo polypropylene resin, "acrylic" indicates an acrylic primer solution, "urethane" indicates a water-based polyurethane resin, "SiOx" indicates silicon oxide, "AlOx" indicates aluminum oxide, and "SC" indicates isocyanurate silane. "HPP (corona treatment)" indicates a case in which a corona treatment was performed on the core layer.

As is clear from the results shown in Tables 1 to 6, it was confirmed that the packaging films using the gas barrier films of the examples were able to keep the oxygen transmission rate low even after the heat sterilization treatment and had excellent lamination strength between the layers.

As is clear from the results shown in Tables 3 and 4, it was confirmed that, when the second skin layer was provided on the core layer or the corona treatment was performed, an effect of increasing the lamination strength between the base layer and the adjacent layer was obtained.

[Table 1]

| | | Example 1 | Example 2 | Example 3 | Example 4 |
|---|---|---|---|---|---|
| Base layer | Material of first skin layer | EBP | EP | EP | EP |
| | Ethylene [mol%] | 2.5 | 5.0 | 3.2 | 7.5 |
| | Butene [mol%] | 3.5 | - | - | - |
| | Propylene [mol%] | 94.0 | 95.0 | 96.8 | 92.5 |
| | Thickness [μm] | 0.7 | 0.7 | 0.7 | 0.7 |
| | Material of core layer | HPP | HPP | HPP | HPP |
| | Thickness [μm] | 19.3 | 19.3 | 19.3 | 19.3 |

(continued)

| | | Example 1 | Example 2 | Example 3 | Example 4 |
|---|---|---|---|---|---|
| Anchor coat layer | Material | Acrylic | Acrylic | Acrylic | Acrylic |
| | Thickness [μm] | 0.1 | 0.1 | 0.1 | 0.1 |
| Vapor deposition layer | Material | SiOx | SiOx | SiOx | SiOx |
| | Thickness [nm] | 30 | 30 | 30 | 30 |
| Gas barrier coating layer | TEOS (mass proportion) | 40 | 40 | 40 | 40 |
| | SC agent (mass proportion) | 5 | 5 | 5 | 5 |
| | PVA (mass proportion) | 55 | 55 | 55 | 55 |
| | Thickness [μm] | 0.3 | 0.3 | 0.3 | 0.3 |
| Hardness [GPa] | First skin layer | 0.065 | 0.067 | 0.088 | 0.039 |
| | Core layer | 0.14 | 0.074 | 0.15 | 0.087 |
| Thickness ratio | First skin layer/core layer | 1/28 | 1/28 | 1/28 | 1/28 |
| Composite elastic modulus [GPa] | First skin layer | 1.92 | 1.61 | 2.09 | 1.25 |
| | Core layer | 3.85 | 2.18 | 3.92 | 2.81 |
| Oxygen transmission rate [$cm^3$(STP)/$m^2$·day·atm] | | 1.2 | 1.5 | 1.4 | 1.8 |
| Lamination strength [N/15 mm] | | 3.5 | 3.7 | 3.2 | 2.5 |

[Table 2]

| | | Comparative Example 1 | Comparative Example 2 | Comparative Example 3 |
|---|---|---|---|---|
| Base layer | Material of first skin layer | - | EBP | EP |
| | Ethylene [mol%] | - | 5.0 | 0.5 |
| | Butene [mol%] | - | 6.0 | - |
| | Propylene [mol%] | - | 89.0 | 99.5 |
| | Thickness [μm] | - | 0.7 | 0.7 |
| | Material of core layer | HPP | HPP | HPP |
| | Thickness [μm] | 19.3 | 19.3 | 19.3 |
| Anchor coat layer | Material | Acrylic | Acrylic | Acrylic |
| | Thickness [μm] | 0.1 | 0.1 | 0.1 |
| Vapor deposition layer | Material | SiOx | SiOx | SiOx |
| | Thickness [nm] | 30 | 30 | 30 |
| Gas barrier coating layer | TEOS (mass proportion) | 40 | 40 | 40 |
| | SC agent (mass proportion) | 5 | 5 | 5 |
| | PVA (mass proportion) | 55 | 55 | 55 |
| | Thickness [μm] | 0.3 | 0.3 | 0.3 |
| Hardness [GPa] | First skin layer | - | 0.018 | 0.156 |
| | Core layer | 0.16 | 0.15 | 0.16 |
| Thickness ratio | First skin layer/core layer | - | 1/28 | 1/28 |

(continued)

| | | Comparative Example 1 | Comparative Example 2 | Comparative Example 3 |
|---|---|---|---|---|
| Composite elastic modulus [GPa] | First skin layer | - | 1.15 | 2.65 |
| | Core layer | 2.54 | 3.92 | 3.37 |
| Oxygen transmission rate [$cm^3$ (STP)/$m^2$·day·atm] | | 5.1 | 3.5 | 1.1 |
| Lamination strength [N/15 mm] | | 0.2 | 1.5 | 0.8 |

[Table 3]

| | | Example 5 | Example 6 | Example 7 |
|---|---|---|---|---|
| Base layer | Material of first skin layer | EBP | EBP | EBP |
| | Ethylene [mol%] | 2.5 | 2.5 | 2.5 |
| | Butene [mol%] | 3.5 | 3.5 | 3.5 |
| | Propylene [mol%] | 94.0 | 94.0 | 94.0 |
| | Thickness [μm] | 0.7 | 0.7 | 0.7 |
| | Material of core layer | HPP | HPP | HPP (corona treatment) |
| | Thickness [μm] | 18.6 | 18.6 | 19.3 |
| | Material of second skin layer | EP | EP | - |
| | Ethylene [mol%] | 7.5 | 5.6 | - |
| | Butene [mol%] | - | - | - |
| | Propylene [mol%] | 92.5 | 94.4 | - |
| | Thickness [μm] | 0.7 | 0.7 | - |
| Anchor coat layer | Material | Acrylic | Acrylic | Acrylic |
| | Thickness [μm] | 0.1 | 0.1 | 0.1 |
| Vapor deposition layer | Material | SiOx | SiOx | SiOx |
| | Thickness [nm] | 30 | 30 | 30 |
| Gas barrier coating layer | TEOS (mass proportion) | 40 | 40 | 40 |
| | SC agent (mass proportion) | 5 | 5 | 5 |
| | PVA (mass proportion) | 55 | 55 | 55 |
| | Thickness [μm] | 0.3 | 0.3 | 0.3 |
| Hardness [GPa] | First skin layer | 0.065 | 0.065 | 0.065 |
| | Core layer | 0.14 | 0.14 | 0.14 |
| | Second skin layer | 0.039 | 0.078 | - |
| Thickness ratio | First skin layer/core layer | 1/27 | 1/27 | 1/28 |
| Composite elastic modulus [GPa] | First skin layer | 1.92 | 1.92 | 1.92 |
| | Core layer | 3.85 | 3.85 | 3.85 |
| | Second skin layer | 1.25 | 1.57 | - |
| Oxygen transmission rate [$cm^3$(STP)/$m^2$·day·atm] | | 1.2 | 1.3 | 1.3 |
| Lamination strength [N/15 mm] | | 5.4 | 4.2 | 2.2 |

[Table 4]

| | | Reference Example 1 | Reference Example 2 | Reference Example 3 |
|---|---|---|---|---|
| Base layer | Material of first skin layer | EBP | EBP | EBP |
| | Ethylene [mol%] | 2.5 | 2.5 | 2.5 |
| | Butene [mol%] | 3.5 | 3.5 | 3.5 |
| | Propylene [mol%] | 94.0 | 94.0 | 94.0 |
| | Thickness [μm] | 0.7 | 0.7 | 0.7 |
| | Material of core layer | HPP | HPP | HPP |
| | Thickness [μm] | 18.6 | 18.6 | 18.6 |
| | Material of second skin layer | HPP | EP | EBP |
| | Ethylene [mol%] | 0 | 0.7 | 5.0 |
| | Butene [mol%] | - | - | 6.0 |
| | Propylene [mol%] | 100 | 99.3 | 89.0 |
| | Thickness [μm] | 0.7 | 0.7 | 0.7 |
| Anchor coat layer | Material | Acrylic | Acrylic | Acrylic |
| | Thickness [μm] | 0.1 | 0.1 | 0.1 |
| Vapor deposition layer | Material | SiOx | SiOx | SiOx |
| | Thickness [nm] | 30 | 30 | 30 |
| Gas barrier coating layer | TEOS (mass proportion) | 40 | 40 | 40 |
| | SC agent (mass proportion) | 5 | 5 | 5 |
| | PVA (mass proportion) | 55 | 55 | 55 |
| | Thickness [μm] | 0.3 | 0.3 | 0.3 |
| Hardness [GPa] | First skin layer | 0.065 | 0.065 | 0.065 |
| | Core layer | 0.14 | 0.14 | 0.14 |
| | Second skin layer | 0.14 | 0.156 | 0.018 |
| Thickness ratio | First skin layer/core layer | 1/27 | 1/27 | 1/27 |
| Composite elastic modulus [GPa] | First skin layer | 1.92 | 1.92 | 1.92 |
| | Core layer | 3.85 | 3.85 | 3.85 |
| | Second skin layer | 3.85 | 2.65 | 1.15 |
| Oxygen transmission rate [$cm^3$ (STP)/$m^2$·day·atm] | | 1.2 | 1.2 | 1.2 |
| Lamination strength [N/15 mm] | | 0.2 | 0.7 | 1.2 |

[Table 5]

| | | Example 8 | Example 9 | Example 10 | Example 11 |
|---|---|---|---|---|---|
| Base layer | Material of first skin layer | EBP | EBP | EBP | BP |
| | Ethylene [mol%] | 2.5 | 2.5 | 2.5 | - |
| | Butene [mol%] | 3.5 | 3.5 | 3.5 | 2.5 |
| | Propylene [mol%] | 94 | 94 | 94 | 97.5 |
| | Thickness [μm] | 0.7 | 0.3 | 1.5 | 0.7 |
| | Material of core layer | HPP | HPP | HPP | HPP |
| | Thickness [μm] | 19.3 | 19.7 | 16.5 | 19.3 |
| Anchor coat layer | Material | Urethane | Acrylic | Acrylic | Acrylic |
| | Thickness [μm] | 1.5 | 0.1 | 0.1 | 0.1 |
| Vapor deposition layer | Material | SiOx | SiOx | SiOx | SiOx |
| | Thickness [nm] | 30 | 30 | 30 | 30 |
| Gas barrier coating layer | TEOS (mass proportion) | 40 | 40 | 40 | 40 |
| | SC agent (mass proportion) | 5 | 5 | 5 | 5 |
| | PVA (mass proportion) | 55 | 55 | 55 | 55 |
| | Thickness [μm] | 0.3 | 0.3 | 0.3 | 0.3 |
| Hardness [GPa] | First skin layer | 0.065 | 0.065 | 0.065 | 0.1 |
| | Core layer | 0.14 | 0.14 | 0.14 | 0.14 |
| Thickness ratio | First skin layer/core layer | 1/28 | 1/66 | 1/11 | 1/28 |
| Composite elastic modulus [GPa] | First skin layer | 1.92 | 1.92 | 1.92 | 1.92 |
| | Core layer | 3.85 | 3.85 | 3.85 | 3.85 |
| Oxygen transmission rate [$cm^3$(STP)/$m^2$·day·atm] | | 1.0 | 1.8 | 1.5 | 1.8 |
| Lamination strength [N/15 mm] | | 2.8 | 3.1 | 3.7 | 3.2 |

[Table 6]

| | | Example 12 | Example 13 | Example 14 |
|---|---|---|---|---|
| Base layer | Material of first skin layer | BP | EBP | EBP |
| | Ethylene [mol%] | - | 2.5 | 2.5 |
| | Butene [mol%] | 1 | 3.5 | 3.5 |
| | Propylene [mol%] | 99 | 94 | 94 |
| | Thickness [μm] | 0.7 | 0.7 | 0.7 |
| | Material of core layer | HPP | HPP | HPP |
| | Thickness [μm] | 19.3 | 19.3 | 19.3 |
| Anchor coat layer | Material | Acrylic | Acrylic | Acrylic |
| | Thickness [μm] | 0.1 | 0.1 | 0.1 |
| Vapor deposition layer | Material | SiOx | SiOx | SiOx |
| | Thickness [nm] | 30 | 30 | 30 |

(continued)

| | | Example 12 | Example 13 | Example 14 |
|---|---|---|---|---|
| Gas barrier coating layer | TEOS (mass proportion) | 40 | 45 | 45 |
| | SC agent (mass proportion) | 5 | 10 | 7 |
| | PVA (mass proportion) | 55 | 45 | 48 |
| | Thickness [μm] | 0.3 | 0.3 | 0.3 |
| Hardness [GPa] | First skin layer | 0.12 | 0.065 | 0.065 |
| | Core layer | 0.14 | 0.14 | 0.14 |
| Thickness ratio | First skin layer/core layer | 1/28 | 1/28 | 1/28 |
| Composite elastic modulus [GPa] | First skin layer | 1.92 | 1.92 | 1.92 |
| | Core layer | 3.85 | 3.85 | 3.85 |
| Oxygen transmission rate [$cm^3$(STP)/$m^2$·day·atm] | | 2.1 | 1.5 | 1.5 |
| Lamination strength [N/15 mm] | | 2.5 | 4.1 | 4.0 |

(Example 15)

A cast polypropylene film with a thickness of 60 μm was laminated on the side of the gas barrier coating layer of the gas barrier film produced in Example 1 with the two-component curing type urethane adhesive (a) therebetween by a dry lamination method to obtain a packaging film.

(Examples 16 to 20)

Packaging films of Examples 16 to 20 were obtained in the same manner as in Example 15 except that two-component curing type urethane adhesives (b) to (f) were used in place of the adhesive (a).

(Example 21)

A cast polypropylene film with a thickness of 60 μm was laminated on the side of the gas barrier coating layer of the gas barrier film produced in Example 2 with the two-component curing type urethane adhesive (a) therebetween by a dry lamination method to obtain a packaging film.

(Examples 22 to 26)

Packaging films of Examples 24 to 28 were obtained in the same manner as in Example 21 except that two-component curing type urethane adhesives (b) to (f) were used in place of the adhesive (a).

(Example 27)

A cast polypropylene film with a thickness of 60 μm was laminated on the side of the gas barrier coating layer of the gas barrier film produced in Example 3 with the two-component curing type urethane adhesive (a) therebetween by a dry lamination method to obtain a packaging film.

(Examples 28 to 32)

Packaging films of Examples 28 to 32 were obtained in the same manner as in Example 27 except that two-component curing type urethane adhesives (b) to (f) were used in place of the adhesive (a).

(Example 33)

A cast polypropylene film with a thickness of 60 μm was laminated on the side of the gas barrier coating layer of the gas barrier film produced in Example 4 with the two-component curing type urethane adhesive (a) therebetween by a dry lamination method to obtain a packaging film.

(Examples 34 to 38)

Packaging films of Examples 34 to 48 were obtained in the same manner as in Example 33 except that two-component curing type urethane adhesives (b) to (f) were used in place of the adhesive (a).

<Evaluation>

(Retort treatment)

The packaging film produced in each example was used to produce a packaging bag with four sealed sides. The packaging bag was filled with water as the contents. Then, the retort sterilization treatment was performed at 130°C for 60 minutes.

(Measurement of hardness of adhesive layer)

In each of Examples 15 to 38, a packaging film which is a part of the packaging bag after the retort treatment was cut. Then, an epoxy adhesive (product name: Bond E Set, commercially available from Konishi Co., Ltd.) was applied onto the base layer of the cut packaging film. Then, the packaging film was attached to a glass plate with the epoxy adhesive therebetween to form a sample having the packaging film smoothly fixed to the glass plate.

After the epoxy adhesive was cured, the sample was placed on a diagonal cutting device (product name: SAICAS DN-GS, commercially available from Daipla Wintes Co., Ltd.). Next, a diamond cutting blade having a V-shaped tip was attached to the diagonal cutting device, and side cut lines were then made at 1 mm intervals on the surface of the sealant layer. Next, a diamond knife with a blade width of 1 mm, a rake angle of 20 degrees, and a clearance angle of 10 degrees was brought into contact with the surface of the sealant layer under a load of 0.05 N, and the sealant layer was then cut obliquely under conditions of a horizontal speed of 50 μm/s and a vertical speed of 1 μm/s. In this case, first, after the cutting depth reached 55 μm, cutting was performed horizontally for 10 mm. Next, finish cutting was performed to a cutting depth of 1 μm under conditions of a horizontal speed of 50 μm/s and a vertical speed of 1 μm/s. The exposed surface after cutting was observed, and finish cutting was added as necessary until a desired exposed surface of the adhesive layer was obtained. Accordingly, the preparation (that is, preparation for exposing the adhesive layer) for measuring the hardness of the adhesive layer after the retort treatment by the nano-indentation method was completed.

Next, a Hysitron TI-Premier (product name, commercially available from Bruker Japan) was used as a device for measuring the hardness of the adhesive layer by the nano-indentation method. In addition, a Berkovich type diamond indenter (commercially available from Bruker Japan) was used as an indenter. Then, the sample with the exposed adhesive layer was placed on the device, and the indenter was then pressed into the sample at room temperature (25°C) in a displacement control mode with settings of an indentation speed of 100 nm/sec, and a test depth of 125 nm. Next, the sample was held at the maximum displacement for 2 seconds and then unloaded at a speed of 50 nm/sec. The surface load was 1 μN, and surface correction was performed using TriboScan software. Measurement points were observed using optical microscope images, 30 points were designated at intervals of 30 μm or more on the surface of the sample, that is, the exposed surface of the adhesive layer (when the distance between the sealant layer and the base layer on the exposed surface was divided into four equal distances, the point that was 1/4 of the distance away from the side of the sealant), and measurement was performed by the nano-indentation method. As the method of calculating the hardness of the adhesive layer, first, a fused quartz standard sample was tested in advance to calibrate the relationship between the contact depth and the contact projection area between the indenter and the sample. Then, the unload curve in the region of 20 to 95% of the maximum load during unloading was analyzed by the Oliver-Pharr method, and the hardness was calculated.

(Oxygen transmission rate)

In the same method as above, the oxygen transmission rate of the packaging film after the retort treatment was measured.

(Measurement of lamination strength)

In the same method as above, the lamination strength between the gas barrier film and the cast polypropylene film after the retort treatment was measured.

Table 7 shows the conditions of the examples and the evaluation results of the examples. As is clear from the results shown in Table 7, as the hardness of the adhesive layer is higher, the oxygen transmission rate measurement result is higher. In addition, it was confirmed that the lamination strength was excellent as in Examples 1 to 14.

[Table 7]

| | Adhesive layer | | Oxygen transmission rate [$cm^3$ (STP)/$m^2$·day·atm] | Lamination strength [N/15 mm] |
|---|---|---|---|---|
| | Adhesive | Hardness [MPa] | | |
| Example 15 | Adhesive (a) | 0.15 | 1.0 | 3.6 |
| Example 16 | Adhesive (b) | 0.2 | 1.1 | 3.7 |
| Example 17 | Adhesive (c) | 0.5 | 1.5 | 3.3 |
| Example 18 | Adhesive (d) | 0.6 | 1.8 | 3.5 |
| Example 19 | Adhesive (e) | 0.7 | 2.2 | 3.7 |
| Example 20 | Adhesive (f) | 0.8 | 2.7 | 3.3 |
| Example 21 | Adhesive (a) | 0.15 | 1.3 | 3.5 |
| Example 22 | Adhesive (b) | 0.2 | 1.5 | 3.7 |
| Example 23 | Adhesive (c) | 0.5 | 1.7 | 3.8 |
| Example 24 | Adhesive (d) | 0.6 | 2.0 | 3.5 |
| Example 25 | Adhesive (e) | 0.7 | 2.6 | 3.7 |
| Example 26 | Adhesive (f) | 0.8 | 3.0 | 4.0 |
| Example 27 | Adhesive (a) | 0.15 | 1.2 | 3.3 |
| Example 28 | Adhesive (b) | 0.2 | 1.4 | 3.5 |
| Example 29 | Adhesive (c) | 0.5 | 1.6 | 3.2 |
| Example 30 | Adhesive (d) | 0.6 | 2.0 | 3.5 |
| Example 31 | Adhesive (e) | 0.7 | 2.4 | 3.2 |
| Example 32 | Adhesive (f) | 0.8 | 2.9 | 3.1 |
| Example 33 | Adhesive (a) | 0.15 | 1.5 | 2.5 |
| Example 34 | Adhesive (b) | 0.2 | 1.8 | 2.3 |
| Example 35 | Adhesive (c) | 0.5 | 2.0 | 2.7 |
| Example 36 | Adhesive (d) | 0.6 | 2.3 | 2.5 |
| Example 37 | Adhesive (e) | 0.7 | 3.0 | 3.0 |
| Example 38 | Adhesive (f) | 0.8 | 3.3 | 3.1 |

Next, Examples 45 to 80 (not according to the present invention) Comparative Examples 5 to 24 will be described.

<Base, outermost layer and sealant layer>

A biaxially oriented polypropylene (OPP) film (product name: ME-1, thickness: 20 μm, commercially available from Mitsui Chemicals Tohcello, Inc.) was prepared as the base and the outermost layer. In addition, a cast polypropylene (CPP) film (product name: Torayfan ZK93KM, thickness: 60 μm, commercially available from Toray Advanced Film Co., Ltd.) was prepared as the sealant layer.

<Preparation of composition for forming adhesive layer >

A mixed solution was produced by mixing and stirring γ-isocyanate propyl trimethoxysilane: acrylic polyol at a ratio of 1:5. Next, toluene diisocyanate (TDI) was added to the mixed solution so that the number of NCO groups of toluene diisocyanate was equal to the number of OH groups of the acrylic polyol. Then, the mixed solution was diluted with ethyl acetate to reach 2 mass%. Thereby, a composition for forming an adhesive layer (anchor coating agent) was prepared.

<Preparation of coating solution $\alpha$ for barrier coating>

10 g of each of the following solution A, solution B and solution C was prepared and mixed to prepare a coating solution $\alpha$.

Solution A: a hydrolyzed solution with a solid content of 5 mass% (in terms of $SiO_2$) obtained by adding 72.1 g of 0.1 N hydrochloric acid to 17.9 g of tetraethoxysilane ($Si(OC_2H_5)_4$) and 10 g of methanol and hydrolyzing the mixture by stirring for 30 minutes.

Solution B: a water/methanol solution containing 5 mass% of polyvinyl alcohol (the mass ratio of water:methanol was 95:5).

Solution C: a hydrolyzed solution in which 1,3,5-tris(3-trialkoxysilylpropyl)isocyanurate was diluted with a mixed solution of water/isopropyl alcohol (the mass ratio of water:isopropyl alcohol was 1:1) so that the solid content was 5 mass%.

<Preparation of coating solution $\beta$ for barrier coating>

First, TEOS, methanol and 0.1 N hydrochloric acid were mixed at a mass ratio of 45/15/40 to obtain a TEOS hydrolyzed solution. Three solutions including this solution, an aqueous solution containing 5 mass% of a polyvinyl alcohol (hereinafter referred to as "PVA"), and a solution obtained by diluting 1,3,5-tris(3-methoxysilylpropyl)isocyanurate as a silane coupling agent with a solution containing water/IPA (isopropyl alcohol) at a ratio of 1/1 so that the solid content was 5 mass% (in terms of $R^2Si(OH)_3$) were mixed to prepare a coating solution $\beta$. The coating solution $\beta$ was prepared so that the mass ratio of the $SiO_2$ solid content (converted value) of TEOS, the $R^2Si(OH)_3$ solid content (converted value) of isocyanurate silane, and the PVA solid content was 40/5/55.

<Preparation of coating solution $\gamma$ for barrier coating>

The following "water-based polyurethane resin": 40 to 75 mass%, "water-soluble polymer": 10 to 40 mass%, and "silane coupling agent": 5 to 20 mass% were mixed to prepare a coating solution $\gamma$.

Water-based polyurethane resin: an aqueous dispersion of a water-based polyurethane resin containing an acid group-containing polyurethane resin and a polyamine compound, water-based polyurethane dispersion "Takelac (registered trademark) WPB-341," (commercially available from Mitsui Chemicals, Inc.), a solid content of 30%.

Water-soluble polymer: a polyvinyl alcohol with a saponification degree of 98 to 99% and a degree of polymerization of 500 (product name: Poval PVA-105, commercially available from Kuraray Co., Ltd.).

Silane coupling agent: 3-glycidoxypropyltriethoxysilane (product name: KBE-403, commercially available from Shin-Etsu Chemical Co., Ltd.).

(Example 45)

A composition for forming an adhesive layer was applied to a base using a bar coater, and the composition for forming an adhesive layer was dried at 50°C. Thereby, an adhesive layer (anchor coat layer) with a thickness of 0.2 $\mu$m was formed. Next, a transparent vapor deposition layer (silica vapor deposition layer) made of silicon oxide and having a thickness of 40 nm was formed using a vacuum vapor deposition device according to an electron beam heating method.

Next, a coating solution $\alpha$ was applied onto the vapor deposition layer using a bar coater, and the coating solution $\alpha$ was dried at 60°C for 1 minute. Thereby, a barrier coat with a thickness of 300 nm was formed on the vapor deposition layer. Accordingly, a barrier layer having a base, an adhesive layer, a vapor deposition layer and a barrier coat was formed.

Next, a two-component curing type urethane adhesive (a) was applied onto the barrier coat of the barrier layer to form an adhesive layer with a thickness of 3 $\mu$m. Next, a sealant layer was laminated with the adhesive layer therebetween by a dry lamination method. Thereby, a laminate (gas barrier laminate) having a laminated structure of the base, the adhesive layer, the vapor deposition layer, the barrier coat, the adhesive layer, and the sealant layer was produced. The content of polypropylene in the obtained laminate was 90 mass% or more.

(Examples 46 to 50)

Laminates of Examples 46 to 50 were produced in the same manner as in Example 1 except that the two-component curing type urethane adhesives (b) to (f) were used in place of the adhesive (a).

(Examples 51 to 56)

Laminates of Examples 51 to 56 were produced in the same manner as in Examples 45 to 50 except that the

coating solution β was used in place of the coating solution α.

(Examples 57 to 62)

Laminates of Examples 57 to 62 were produced in the same manner as in Examples 45 to 50 except that the coating solution γ was used in place of the coating solution α.

(Example 63)

After a barrier layer was formed in the same manner as in Example 45, a two-component curing type urethane adhesive (a) was applied onto a barrier coat of a barrier layer to form an adhesive layer with a thickness of 3 μm. Next, the outermost layer was laminated with the adhesive layer therebetween by a dry lamination method. Next, a two-component curing type urethane adhesive (a) was applied onto a base of the barrier layer to form an adhesive layer with a thickness of 3 μm. Next, a sealant layer was laminated with the adhesive layer therebetween by a dry lamination method. Thereby, a laminate (gas barrier laminate) having a laminated structure of the outermost layer, the second adhesive layer, the barrier coat, the vapor deposition layer, the adhesive layer, the base, the adhesive layer, and the sealant layer was produced. The content of polypropylene in the obtained laminate was 90 mass% or more.

(Examples 64 to 68)

Laminates of Examples 64 to 68 were produced in the same manner as in Example 63 except that the two-component curing type urethane adhesives (b) to (f) were used as the adhesive (a).

(Examples 69 to 74)

Laminates of Examples 69 to 74 were produced in the same manner as in Examples 63 to 68 except that the coating solution β was used in place of the coating solution α.

(Examples 75 to 80)

Laminates of Examples 75 to 80 were produced in the same manner as in Examples 63 to 68 except that the coating solution γ was used in place of the coating solution α.

(Comparative Examples 5 to 7)

Laminates of Comparative Examples 5 to 7 were produced in the same manner as in Example 45 except that the adhesives (g) to (i) were used in place of the adhesive (a).

(Comparative Examples 8 to 10)

Laminates of Comparative Examples 8 to 10 were produced in the same manner as in Example 51 except that the adhesives (g) to (i) were used in place of the adhesive (a).

(Comparative Examples 11 to 13)

Laminates of Comparative Examples 11 to 13 were produced in the same manner as in Example 57 except that the adhesive (g) to (i) were used in place of the adhesive (a).

(Comparative Examples 14 to 16)

Laminates of Comparative Examples 14 to 16 were produced in the same manner as in Example 63 except that the adhesives (g) to (i) were used in place of the adhesive (a).

(Comparative Examples 17 to 19)

Laminates of Comparative Examples 17 to 19 were produced in the same manner as in Example 69 except that the adhesives (g) to (i) were used in place of the adhesive (a).

(Comparative Examples 20 to 22)

Laminates of Comparative Examples 20 to 22 were produced in the same manner as in Example 75 except that the adhesives (g) to (i) were used in place of the adhesive (a).

(Comparative Example 23)

A laminate of Comparative Example 19 was produced in the same manner as in Example 45 except that a PET film (thickness: 20 μm) was used in place of the OPP film as the base.

(Comparative Example 24)

A laminate of Comparative Example 20 was produced in the same manner as in Comparative Example 5 except that a PET film (thickness: 20 μm) was used in place of the OPP film as the base.

<Method of measuring heat shrinkage rate of base>

The heat shrinkage rate of the base contained in the barrier layer was measured according to the following procedure. The following Table 8 shows the measurement results of the heat shrinkage rates of the bases in Examples 45 to 50 and Comparative Examples 5 to 7. The following Table 9 shows the measurement results of the heat shrinkage rates of the bases in Examples 51 to 56 and Comparative Examples 8 to 10. The following Table 10 shows the measurement results of the heat shrinkage rates of the bases in Examples 57 to 62 and Comparative Examples 11 to 13. The following Table 11 shows the measurement results of the heat shrinkage rates of the bases in Examples 63 to 68 and Comparative Examples 14 to 16. The following Table 12 shows the measurement results of the heat shrinkage rates of the bases in Examples 69 to 74 and Comparative Examples 17 to 19. The following Table 13 shows the measurement results of the heat shrinkage rates of the bases in Examples 75 to 80 and Comparative Examples 20 to 22. The following Table 14 shows the measurement results of the heat shrinkage rates of the bases in Comparative Examples 23 and 24.

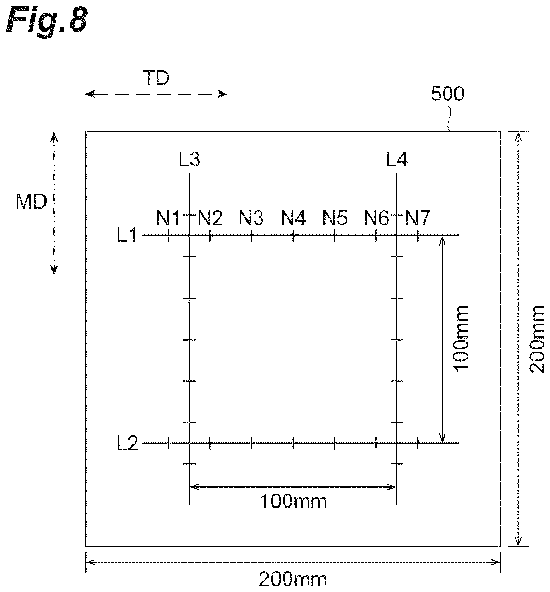

(a) As shown in FIG. 8, a base as a measurement object was cut to 200 mm×200 mm to obtain a measurement sample 500.
(b) As shown in FIG. 8, two straight lines L1 and L2 with a length of 120 mm or more parallel to the TD direction of the measurement sample 500 were drawn with an interval of 100 mm.
(c) As shown in FIG. 8, two straight lines L3 and L4 with a length of 120 mm or more parallel to the MD direction of the measurement sample 500 were drawn with an interval of 100 mm.
(d) As shown in FIG. 8, scale marks N1 to N7 were drawn at seven points on the straight line L1 at intervals of 20 mm. Scale marks were drawn similarly on the straight lines L2 to L4. In this case, when the scale marks N1 to N7 on the straight line L1 were connected to the scale marks N1 to N7 on the straight line L2 with a straight line, the positions of the scale marks on the straight lines L1 and L2 were aligned so that the straight line was parallel to the MD direction. In addition, when the scale marks N1 to N7 on the straight line L3 were connected to the scale marks N1 to N7 on the straight line L4 with a straight line, the positions of the scale marks on the straight lines L3 and L4 were aligned so that the straight line was parallel to the TD direction.
(e) The measurement sample 500 placed on a Teflon (registered trademark) sheet was placed on a glass plate in an oven heated to a predetermined temperature (150°C or 160°C) and heated for 15 minutes. After heating, the measurement sample 500 was removed from the oven and left at room temperature (25°C) for 30 minutes.
(f) The linear distance between the scale mark N1 on the straight line L1 (intersection of L1 and N1) and the scale mark N1 on the straight line L2 (intersection of L2 and N1) was measured as the MD direction length before and after heating, and the heat shrinkage rate in the MD direction was calculated by the following Formula (1). Similarly, the heat shrinkage rate in the MD direction was determined at each position of the scale marks N1 to N7, and the average value thereof was regarded as the heat shrinkage rate of the measurement sample 500 in the MD direction.

heat shrinkage rate in the MD direction (%)=(MD direction length before heating-MD direction length after heating)/MD direction length before heating×100 (1)

<Retort treatment>

The laminates produced in the examples and comparative examples were used to produce packaging bags with four sealed sides. The packaging bag was filled with water as the contents. Then, the retort sterilization treatment was performed at 130°C for 60 minutes.

<Measurement of hardness of adhesive layer>

In each of Examples 45 to 62 and Comparative Examples 5 to 13, a laminate which is a part of the packaging bag after the retort treatment was cut. Then, an epoxy adhesive (product name: Bond E Set, commercially available from Konishi Co., Ltd.) was applied onto the base of the cut laminate. Then, the laminate was attached to a glass plate with the epoxy adhesive therebetween to form a sample having the laminate smoothly fixed to the glass plate. Here, in each of Examples 63 to 80 and Comparative Examples 14 to 22, an epoxy adhesive (product name: Bond E Set, commercially available from Konishi Co., Ltd.) was applied onto the outermost layer of the laminate after the retort treatment to form a sample.

After the epoxy adhesive was cured, the sample was placed on a diagonal cutting device (product name: SAICAS DN-GS, commercially available from Daipla Wintes Co., Ltd.). Next, a diamond cutting blade having a V-shaped tip was attached to the diagonal cutting device, and side cut lines were then made at 1 mm intervals on the surface of the sealant layer. Next, a diamond knife with a blade width of 1 mm, a rake angle of 20 degrees, and a clearance angle of 10 degrees was brought into contact with the surface of the sealant layer under a load of 0.05 N, and the sealant layer was then cut obliquely under conditions of a horizontal speed of 50 μm/s and a vertical speed of 1 μm/s. In this case, first, after the cutting depth reached 55 μm, cutting was performed horizontally for 10 mm. Next, finish cutting was performed to a cutting depth of 1 μm under conditions of a horizontal speed of 50 μm/s and a vertical speed of 1 μm/s. The exposed surface after cutting was observed, and finish cutting was added as necessary until a desired exposed surface of the adhesive layer was obtained. Accordingly, the preparation (that is, preparation for exposing the adhesive layer) for measuring the hardness of the adhesive layer after the retort treatment by the nano-indentation method was completed.

Next, a Hysitron TI-Premier (product name, commercially available from Bruker Japan) was used as a device for measuring the hardness of the adhesive layer by the nano-indentation method. In addition, a Berkovich type diamond indenter (commercially available from Bruker Japan) was used as an indenter. Then, the sample with the exposed adhesive layer was placed on the device, and the indenter was then pressed into the sample at room temperature (25°C) in a displacement control mode with settings of an indentation speed of 100 nm/sec, and a test depth of 125 nm. Next, the sample was held at the maximum displacement for 2 seconds and then unloaded at a speed of 50 nm/sec. The surface load was 1 μN, and surface correction was performed using TriboScan software. Measurement points were observed using optical microscope images, 30 points were designated at intervals of 30 μm or more on the surface of the sample, that is, the exposed surface of the adhesive layer (when the distance between the sealant layer and the base layer on the exposed surface was divided into four equal distances, the point that was 1/4 of the distance away from the side of the sealant), and measurement was performed by the nano-indentation method. As the method of calculating the hardness of the adhesive layer, first, a fused quartz standard sample was tested in advance to calibrate the relationship between the contact depth and the contact projection area between the indenter and the sample. Then, the unload curve in the region of 20 to 95% of the maximum load during unloading was analyzed by the Oliver-Pharr method, and the hardness was calculated. The following Tables 8 to 14 show the measurement results of the hardness of the adhesive layers in Examples 45 to 80 and Comparative Examples 5 to 24.

(Measurement of oxygen transmission rate)

The oxygen transmission rate (OTR) of the laminate after the retort treatment was measured. The measurement was performed using an oxygen transmission rate measurement device (OXTRAN 2/20, commercially available from Modern Control) under conditions of a temperature of 30°C and a relative humidity of 70%. The OTR measurement method was performed according to JIS K-7126, the method B (isobaric method), and the ASTM D3985-81, and the measured value of OTR was expressed as the unit [cc/m$^2$·day·atm]. The following Tables 8 to 14 shows the measurement results of OTR of Examples 45 to 80 and Comparative Examples 5 to 24.

[Table 8]

| | Coating solution | Adhesive | Hardness of adhesive layer after retort treatment (MPa) | OTR | Heat shrinkage rate of base (%) |
|---|---|---|---|---|---|
| Example 45 | Coating solution α | Adhesive (a) | 0.15 | 3.0 | 2.0 |
| Example 46 | Coating solution α | Adhesive (b) | 0.2 | 4.0 | 2.0 |
| Example 47 | Coating solution α | Adhesive (c) | 0.5 | 6.0 | 2.0 |
| Example 48 | Coating solution α | Adhesive (d) | 0.6 | 7.0 | 2.0 |
| Example 49 | Coating solution α | Adhesive (e) | 0.7 | 8.0 | 2.0 |

(continued)

| | Coating solution | Adhesive | Hardness of adhesive layer after retort treatment (MPa) | OTR | Heat shrinkage rate of base (%) |
|---|---|---|---|---|---|
| Example 50 | Coating solution α | Adhesive (f) | 0.8 | 8.5 | 2.0 |
| Comparative Example 5 | Coating solution α | Adhesive (g) | 0.9 | 15.0 | 2.0 |
| Comparative Example 6 | Coating solution α | Adhesive (h) | 1.0 | 15.0 | 2.0 |
| Comparative Example 7 | Coating solution α | Adhesive (i) | 1.1 | 16.0 | 2.0 |

[Table 9]

| | Coating solution | Adhesive | Hardness of adhesive layer after retort treatment (MPa) | OTR | Heat shrinkage rate of base (%) |
|---|---|---|---|---|---|
| Example 51 | Coating solution β | Adhesive (a) | 0.15 | 1.0 | 2.0 |
| Example 52 | Coating solution β | Adhesive (b) | 0.2 | 1.0 | 2.0 |
| Example 53 | Coating solution β | Adhesive (c) | 0.5 | 1.5 | 2.0 |
| Example 54 | Coating solution β | Adhesive (d) | 0.6 | 2.0 | 2.0 |
| Example 55 | Coating solution β | Adhesive (e) | 0.7 | 2.5 | 2.0 |
| Example 56 | Coating solution β | Adhesive (f) | 0.8 | 2.5 | 2.0 |
| Comparative Example 8 | Coating solution β | Adhesive (g) | 0.9 | 5.0 | 2.0 |
| Comparative Example 9 | Coating solution β | Adhesive (h) | 1.0 | 5.5 | 2.0 |
| Comparative Example 10 | Coating solution β | Adhesive (i) | 1.1 | 6.0 | 2.0 |

[Table 10]

| | Coating solution | Adhesive | Hardness of adhesive layer after retort treatment (MPa) | OTR | Heat shrinkage rate of base (%) |
|---|---|---|---|---|---|
| Example 57 | Coating solution γ | Adhesive (a) | 0.15 | 1.0 | 2.0 |
| Example 58 | Coating solution γ | Adhesive (b) | 0.2 | 1.0 | 2.0 |
| Example 59 | Coating solution γ | Adhesive (c) | 0.5 | 1.5 | 2.0 |
| Example 60 | Coating solution γ | Adhesive (d) | 0.6 | 1.5 | 2.0 |
| Example 61 | Coating solution γ | Adhesive (e) | 0.7 | 2.0 | 2.0 |
| Example 62 | Coating solution γ | Adhesive (f) | 0.8 | 2.5 | 2.0 |
| Comparative Example 11 | Coating solution γ | Adhesive (g) | 0.9 | 4.5 | 2.0 |
| Comparative Example 12 | Coating solution γ | Adhesive (h) | 1.0 | 4.5 | 2.0 |
| Comparative Example 13 | Coating solution γ | Adhesive (i) | 1.1 | 5.0 | 2.0 |

[Table 11]

| | Coating solution | Adhesive | Hardness of adhesive layer after retort treatment (MPa) | OTR | Heat shrinkage rate of base (%) |
|---|---|---|---|---|---|
| Example 63 | Coating solution α | Adhesive (a) | 0.15 | 2.5 | 2.0 |

(continued)

| | Coating solution | Adhesive | Hardness of adhesive layer after retort treatment (MPa) | OTR | Heat shrinkage rate of base (%) |
|---|---|---|---|---|---|
| Example 64 | Coating solution α | Adhesive (b) | 0.2 | 2.5 | 2.0 |
| Example 65 | Coating solution α | Adhesive (c) | 0.5 | 4.0 | 2.0 |
| Example 66 | Coating solution α | Adhesive (d) | 0.6 | 4.5 | 2.0 |
| Example 67 | Coating solution α | Adhesive (e) | 0.7 | 5.0 | 2.0 |
| Example 68 | Coating solution α | Adhesive (f) | 0.8 | 6.0 | 2.0 |
| Comparative Example 14 | Coating solution α | Adhesive (g) | 0.9 | 10.0 | 2.0 |
| Comparative Example 15 | Coating solution α | Adhesive (h) | 1.0 | 10.5 | 2.0 |
| Comparative Example 16 | Coating solution α | Adhesive (i) | 1.1 | 11.0 | 2.0 |

[Table 12]

| | Coating solution | Adhesive | Hardness of adhesive layer after retort treatment (MPa) | OTR | Heat shrinkage rate of base (%) |
|---|---|---|---|---|---|
| Example 69 | Coating solution β | Adhesive (a) | 0.15 | 0.8 | 2.0 |
| Example 70 | Coating solution β | Adhesive (b) | 0.2 | 0.8 | 2.0 |
| Example 71 | Coating solution β | Adhesive (c) | 0.5 | 1.0 | 2.0 |
| Example 72 | Coating solution β | Adhesive (d) | 0.6 | 1.5 | 2.0 |
| Example 73 | Coating solution β | Adhesive (e) | 0.7 | 2.0 | 2.0 |
| Example 74 | Coating solution β | Adhesive (f) | 0.8 | 2.0 | 2.0 |
| Comparative Example 17 | Coating solution β | Adhesive (g) | 0.9 | 4.0 | 2.0 |
| Comparative Example 18 | Coating solution β | Adhesive (h) | 1.0 | 4.0 | 2.0 |
| Comparative Example 19 | Coating solution β | Adhesive (i) | 1.1 | 4.5 | 2.0 |

[Table 13]

| | Coating solution | Adhesive | Hardness of adhesive layer after retort treatment (MPa) | OTR | Heat shrinkage rate of base (%) |
|---|---|---|---|---|---|
| Example 75 | Coating solution γ | Adhesive (a) | 0.15 | 0.8 | 2.0 |
| Example 76 | Coating solution γ | Adhesive (b) | 0.2 | 0.8 | 2.0 |
| Example 77 | Coating solution γ | Adhesive (c) | 0.5 | 1.0 | 2.0 |
| Example 78 | Coating solution γ | Adhesive (d) | 0.6 | 1.0 | 2.0 |
| Example 79 | Coating solution γ | Adhesive (e) | 0.7 | 1.5 | 2.0 |
| Example 80 | Coating solution γ | Adhesive (f) | 0.8 | 2.0 | 2.0 |
| Comparative Example 20 | Coating solution γ | Adhesive (g) | 0.9 | 3.5 | 2.0 |
| Comparative Example 21 | Coating solution γ | Adhesive (h) | 1.0 | 4.0 | 2.0 |
| Comparative Example 22 | Coating solution γ | Adhesive (i) | 1.1 | 4.0 | 2.0 |

[Table 14]

| | Coating solution | Adhesive | Hardness of adhesive layer after retort treatment (MPa) | OTR | Heat shrinkage rate of base (%) |
|---|---|---|---|---|---|
| Comparative Example 23 | Coating solution α | Adhesive (a) | 0.15 | 0.2 | 0.5 |
| Comparative Example 24 | Coating solution α | Adhesive (g) | 0.9 | 0.5 | 0.5 |

In Tables 8 to 14, as the hardness of the adhesive layer is higher, the oxygen transmission rate measurement result is higher. However, the absolute value of the oxygen transmission rate varies greatly depending on whether the heat shrinkage rate of the base is 1% or more. Specifically, when a base having a heat shrinkage rate of 1% or more is used, as shown in Tables 8 to 13, the oxygen transmission rate when the hardness of the adhesive layer is 0.9 MPa or more is higher than the oxygen transmission rate when the hardness of the adhesive is 0.8 MPa. In addition, the oxygen transmission rate when the hardness of the adhesive layer is 0.9 MPa or more is at least 3.5 or more. On the other hand, when a base having a heat shrinkage rate of less than 1% is used, as shown in Table 7, the difference between the oxygen transmission rate when the hardness of the adhesive layer is 0.9 MPa or more and the oxygen transmission rate when the hardness of the adhesive is 0.8 MPa can be said to be within the margin of error.

In Tables 8 to 10, and Tables 11 to 13, the oxygen transmission rate of examples and comparative examples using the coating solution β or coating solution γ is lower than that of examples and comparative examples using the coating solution α. In addition, the oxygen transmission rate of examples and comparative examples having the outermost layer is lower than that of examples and comparative examples having no outermost layer.

## Reference Signs List

1···Base layer
2, 43···Vapor deposition layer
3···Gas barrier coating layer
10a, 10b···Gas barrier film
11···First skin layer
12···Core layer
13···Second skin layer
20, 30···Packaging film
22···Outer layer film (outermost layer)
23, 50···Sealant layer
24, 60···Adhesive layer
25, 60A···Second adhesive layer
35, 35A···Laminate (packaging film)
40···Barrier layer (gas barrier film)
41···Base (base layer)
44···Barrier coat (gas barrier coating layer)
70···Outermost layer
100···Packaging bag

## Claims

**1.** A gas barrier film comprising a base layer, a vapor deposition layer containing an inorganic oxide, and a gas barrier coating layer in that order,

wherein the base layer includes a first skin layer, a core layer and a second skin layer in that order each containing a polypropylene resin, and the vapor deposition layer is formed on the side of the first skin layer, and

wherein the hardness of the first skin layer measured by a nano-indentation method is 0.02 to 0.15 GPa, the hardness of the core layer is 0.07 GPa or more, and the hardness of the core layer is larger than the hardness of the first skin layer, and

wherein the second skin layer contains a propylene-α-olefin copolymer.

**2.** The gas barrier film according to claim 1, wherein the first skin layer contains a propylene-α-olefin copolymer.

**3.** The gas barrier film according to claim 1 or 2, wherein the ratio of the thickness of the first skin layer to the thickness of the core layer is 1/100 to 1/5.

**4.** The gas barrier film according to any one of claims 1 to 3, wherein the composite elastic modulus of the first skin layer measured by the nano-indentation method is 1.2 to 2.5 GPa, and the composite elastic modulus of the core layer is 2.0 GPa or more.

**5.** The gas barrier film according to any one of claims 1 to 4, wherein the inorganic oxide includes at least one of aluminum oxide or silicon oxide.

**6.** The gas barrier film according to any one of claims 1 to 5, wherein the gas barrier coating layer is made of a cured product of a composition containing a water-soluble polymer including a hydroxyl group, and at least one selected from the group consisting of a metal alkoxide, a silane coupling agent and a hydrolysate thereof.

**7.** The gas barrier film according to any one of claims 1 to 6, wherein the gas barrier film further comprises an anchor coat layer between the base layer and the vapor deposition layer.

**8.** The gas barrier film according to any one of claims 1 to 7, wherein the hardness of the second skin layer measured by the nano-indentation method is 0.02 to 0.15 GPa.

**9.** The gas barrier film according to any one of claims 1 to 8, wherein the thickness of the vapor deposition layer is 5 nm or more and 80 nm or less.

**10.** A packaging film, comprising:

the gas barrier film according to any one of claims 1 to 9;
a sealant layer that overlaps the gas barrier coating layer; and
an adhesive layer that bonds the gas barrier coating layer and the sealant layer,
wherein, after a retort treatment is performed on the packaging film, the hardness of the adhesive layer measured by a nano-indentation method is 0.1 MPa or more and less than 0.9 MPa.

**11.** The packaging film according to claim 10, wherein, before the retort treatment is performed, the hardness of the adhesive layer measured by the nano-indentation method is 1.0 MPa or more.

**12.** The packaging film according to claim 10 or 11, wherein the thickness of the adhesive layer is 0.5 μm or more and 10 μm or less.

**13.** The packaging film according to any one of claims 10 to 12,

wherein each of the base layer and the sealant layer is a polyolefin film, and
wherein the total mass proportion of polyolefins in the packaging film is 90 mass% or more.

**14.** The packaging film according to any one of claims 10 to 13,

wherein the base layer is an oriented polypropylene film, and
wherein the sealant layer is a cast polypropylene film.

**15.** The packaging film according to any one of claims 10 to 14, further comprising:

an outermost layer that overlaps the base layer; and

a second adhesive layer that bonds the outermost layer and the base layer,
wherein the adhesive layer bonds the base layer and the sealant layer, and
wherein the second adhesive layer bonds the base layer and the outermost layer.

## Patentansprüche

1. Gassperrfolie, die eine Basisschicht, eine ein anorganisches Oxid enthaltenden Aufdampfschicht und eine Gassperrbeschichtungschicht in dieser Reihenfolge umfasst,

   wobei die Basisschicht eine erste Randschicht, eine Kernschicht und eine zweite Randschicht in dieser Reihenfolge umfasst, die jeweils ein Polypropylenharz enthalten, und die Aufdampfschicht auf der Seite der ersten Randschicht gebildet ist, und
   wobei die Härte der ersten Randschicht, gemessen mittels eines Nanoindentationsverfahrens, 0,02 bis 0,15 GPa beträgt, die Härte der Kernschicht 0,07 GPa oder mehr beträgt und die Härte der Kernschicht größer ist als die Härte der ersten Randschicht, und
   wobei die zweite Randschicht ein Propylen-$\alpha$-Olefin-Copolymer enthält.

2. Gassperrfolie nach Anspruch 1,
   wobei die erste Randschicht ein Propylen-$\alpha$-Olefin-Copolymer enthält.

3. Gassperrfolie nach Anspruch 1 oder 2,
   wobei das Verhältnis der Dicke der ersten Randschicht zur Dicke der Kernschicht 1/100 bis 1/5 beträgt.

4. Gassperrfolie nach einem der Ansprüche 1 bis 3,
   wobei der Verbund-Elastizitätsmodul der ersten Randschicht, gemessen mittels des Nanoindentationsverfahrens, 1,2 bis 2,5 GPa beträgt und der Verbund-Elastizitätsmodul der Kernschicht 2,0 GPa oder mehr beträgt.

5. Gassperrfolie nach einem der Ansprüche 1 bis 4,
   wobei das anorganische Oxid mindestens eines von Aluminiumoxid oder Siliciumoxid enthält.

6. Gassperrfolie nach einem der Ansprüche 1 bis 5,
   wobei die Gassperrbeschichtungschicht aus einem gehärteten Produkt einer Zusammensetzung, die ein wasserlösliches Polymer mit einer Hydroxylgruppe und mindestens eines ausgewählt aus der Gruppe bestehend aus einem Metallalkoxid, einem Silan-Haftvermittler und einem Hydrolysat davon enthält, hergestellt ist.

7. Gassperrfolie nach einem der Ansprüche 1 bis 6,
   wobei die Gassperrfolie ferner eine Haftvermittlerschicht zwischen der Basisschicht und der Aufdampfschicht umfasst.

8. Gassperrfolie nach einem der Ansprüche 1 bis 7,
   wobei die Härte der zweiten Hautschicht, gemessen mittels des Nanoindentationsverfahrens, 0,02 bis 0,15 GPa beträgt.

9. Gassperrfolie nach einem der Ansprüche 1 bis 8,
   wobei die Dicke der Aufdampfschicht 5 nm oder mehr und 80 nm oder weniger beträgt.

10. Verpackungsfolie, die umfasst:

    die Gassperrfolie nach einem der Ansprüche 1 bis 9;
    eine Versiegelungsschicht, die die Gassperrschicht überlappt; und
    eine Klebeschicht, die die Gassperrschicht und die Versiegelungsschicht miteinander verbindet,
    wobei nach Durchführung einer Retortenbehandlung an der Verpackungsfolie die Härte der Klebeschicht, gemessen mittels eines Nanoindentationsverfahrens, 0,1 MPa oder mehr und weniger als 0,9 MPa beträgt.

11. Verpackungsfolie nach Anspruch 10,
    wobei vor Durchführung der Retortenbehandlung die Härte der Klebeschicht, gemessen mittels des Nanoindentationsverfahrens, 1,0 MPa oder mehr beträgt.

**12.** Verpackungsfolie nach Anspruch 10 oder 11,
wobei die Dicke der Klebeschicht 0,5 μm oder mehr und 10 μm oder weniger beträgt.

**13.** Verpackungsfolie nach einem der Ansprüche 10 bis 12,

wobei sowohl die Basisschicht als auch die Versiegelungsschicht jeweils eine Polyolefinfolie sind und
wobei der Gesamtmassenanteil an Polyolefinen in der Verpackungsfolie 90 Massen-% oder mehr beträgt.

**14.** Verpackungsfolie nach einem der Ansprüche 10 bis 13,

wobei die Basisschicht eine orientierte Polypropylenfolie ist und
wobei die Versiegelungsschicht eine gegossene Polypropylenfolie ist.

**15.** Verpackungsfolie nach einem der Ansprüche 10 bis 14, die ferner umfasst:

eine äußerste Schicht, die die Basisschicht überlappt; und
eine zweite Klebeschicht, die die äußerste Schicht und die Basisschicht verbindet,
wobei die Klebeschicht die Basisschicht und die Versiegelungsschicht verbindet, und
wobei die zweite Klebeschicht die Basisschicht und die äußerste Schicht verbindet.

## Revendications

**1.** Film barrière aux gaz comprenant une couche de base, une couche de dépôt en phase vapeur contenant un oxyde inorganique et une couche de revêtement barrière aux gaz dans cet ordre,

dans lequel la couche de base comporte une première couche de peau, une couche centrale et une seconde couche de peau dans cet ordre contenant chacune une résine de polypropylène et la couche de dépôt en phase vapeur est formée du côté de la première couche de peau et
dans lequel la dureté de la première couche de peau mesurée par une méthode de nano-indentation est de 0,02 à 0,15 GPa, la dureté de la couche centrale est supérieure ou égale à 0,07 GPa et la dureté de la couche centrale est plus grande que la dureté de la première couche de peau et
dans lequel la seconde couche de peau contient un copolymère de propylène-α-oléfine.

**2.** Film barrière aux gaz selon la revendication 1,
dans lequel la première couche de peau contient un copolymère de propylène-α-oléfine.

**3.** Film barrière aux gaz selon la revendication 1 ou 2,
dans lequel le rapport de l'épaisseur de la première couche de peau à l'épaisseur de la couche centrale est de 1/100 à 1/5.

**4.** Film barrière aux gaz selon l'une quelconque des revendications 1 à 3,
dans lequel le module d'élasticité composite de la première couche de peau mesuré par la méthode de nano-indentation est de 1,2 à 2,5 GPa et le module d'élasticité composite de la couche centrale est supérieur ou égal à 2,0 GPa.

**5.** Film barrière aux gaz selon l'une quelconque des revendications 1 à 4,
dans lequel l'oxyde inorganique renferme au moins l'un de l'oxyde d'aluminium ou de l'oxyde de silicium.

**6.** Film barrière aux gaz selon l'une quelconque des revendications 1 à 5,
dans lequel la couche de revêtement barrière aux gaz est constituée d'un produit durci d'une composition contenant un polymère hydrosoluble renfermant un groupe hydroxyle et au moins un composant choisi dans le groupe constitué par un alcoolate métallique, un agent de couplage silane et un hydrolysat de ceux-ci.

**7.** Film barrière aux gaz selon l'une quelconque des revendications 1 à 6,
le film barrière aux gaz comprenant en outre une couche de revêtement d'ancrage entre la couche de base et la couche de dépôt en phase vapeur.

**8.** Film barrière aux gaz selon l'une quelconque des revendications 1 à 7, dans lequel la dureté de la seconde couche de peau mesurée par la méthode de nano-indentation est de 0,02 à 0,15 GPa.

**9.** Film barrière aux gaz selon l'une quelconque des revendications 1 à 8, dans lequel l'épaisseur de la couche de dépôt en phase vapeur est supérieure ou égale à 5 nm et inférieure ou égale à 80 nm.

**10.** Film d'emballage, comprenant :

le film barrière aux gaz selon l'une quelconque des revendications 1 à 9 ;
une couche de matériau de scellage qui recouvre la couche de revêtement barrière aux gaz ; et
une couche adhésive qui colle la couche de revêtement barrière aux gaz et la couche de matériau de scellage,
dans lequel, après qu'un traitement en autoclave a été effectué sur le film d'emballage, la dureté de la couche adhésive mesurée par une méthode de nano-indentation est supérieure ou égale à 0,1 MPa et inférieure à 0,9 MPa.

**11.** Film d'emballage selon la revendication 10, dans lequel, avant que le traitement en autoclave soit effectué, la dureté de la couche adhésive mesurée par la méthode de nano-indentation est supérieure ou égale à 1,0 MPa.

**12.** Film d'emballage selon la revendication 10 ou 11, dans lequel l'épaisseur de la couche adhésive est supérieure ou égale à 0,5 $\mu$m et inférieure ou égale à 10 $\mu$m.

**13.** Film d'emballage selon l'une quelconque des revendications 10 à 12,

dans lequel chacune de la couche de base et de la couche de matériau de scellage est un film de polyoléfine et
dans lequel la proportion massique totale de polyoléfines dans le film d'emballage est supérieure ou égale à 90 % en masse.

**14.** Film d'emballage selon l'une quelconque des revendications 10 à 13,

dans lequel la couche de base est un film de polypropylène orienté et
dans lequel la couche de matériau de scellage est un film de polypropylène coulé.

**15.** Film d'emballage selon l'une quelconque des revendications 10 à 14, comprenant en outre :

une couche la plus à l'extérieur qui recouvre la couche de base ; et
une seconde couche adhésive qui colle la couche la plus à l'extérieur et la couche de base,
dans lequel la couche adhésive colle la couche de base et la couche de matériau de scellage et
dans lequel la seconde couche adhésive colle la couche de base et la couche la plus à l'extérieur.

*Fig.1*

10a
3
2
11
1
12

*Fig.2*

10b
3
2
11
12
1
13

***Fig.3***

20
12
11
10a
2
3
24
23

*Fig.4*

30
22
25
3
2
11
10b
12
13
24
23

Fig.5

(a)

35
MD
TD

(b)

35
41
42
40
43
44
60
50

*Fig.6*

100
103
101
102

*Fig.7*

35A
70
60A
44
43
42
40
41
60
50

# Fig.8

TD
500
MD
L3
L4
N1
N2
N3
N4
N5
N6
N7
L1
L2
100mm
200mm
100mm
200mm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021125100 A1
- WO 2021112243 A1
- WO 2021220935 A1
- JP 63291929 A
- JP 63290743 A
- JP 2969657 B